# EUROPÄISCHE PATENTANMELDUNG

(11) **EP 2 284 076 A1**
(43) Veröffentlichungstag der Anmeldung: **16.02.2011**
(21) Anmeldenummer: 09450149.1
(22) Anmeldetag: 12.08.2009
(51) Int. Cl.: B64C 1/12, B64C 1/06, B64F 5/00, B29D 99/00, B29C 53/80, B29C 53/66, B29B 15/12

(54) **Verfahren zur Herstellung eines - als Sandwichkonstruktion ausgebildeten - Hohlkörpers**

(71) Anmelder: Dermond-Forstner & Sreboth OG, 1010 Wien (AT)
(72) Erfinder: Dermond, Heinrich, 1010 Wien (AT)
(74) Vertreter: Gibler & Poth Patentanwälte OG

(57) **Zusammenfassung**

Bei einem Verfahren zur Herstellung eines - als Sandwichkonstruktion ausgebildeten - Hohlkörpers (1), insbesondere eines Flugzeugrumpfs (2), wobei eine Innenschicht (3) aus einer vorgebbaren Anzahl an Lagen (4) eines vorgebbaren wenigstens harzbenetzten Faserwerkstoffes (5), insbesondere umfassend Kohlenstofffasem, gebildet wird, wird zur einfachen, schnellen und kostengünstigen Bildung eines, auch großvolumigen, Hohlraums, welcher in Relation zu dessen Größe ein geringes Gewicht und eine hohe mechanische Belastbarkeit aufweist, vorgeschlagen, dass wenigstens eine erste Lage (6) der Innenschicht (3) schraublinienförmig und - im Wesentlichen über eine gesamte Länge des Hohlkörpers (1) - unterbrechungsfrei angeordnet wird.

## Beschreibung

Die Erfindung betrifft ein Verfahren zur Herstellung eines - als Sandwichkonstruktion ausgebildeten - Hohlkörpers gemäß dem Oberbegriff des Patentanspruches 1.

Es ist bekannt Flugzeugrümpfe, welche besonders bevorzugte Hohlkörper im Sinne der gegenständlichen Erfindung sind, aus bzw. umfassend Verbundwerkstoffen herzustellen. Dabei ist es üblich die Flugzeugrümpfe in Teilen, in der Regel ringförmigen Segmenten, im sog. Parallelauflageverfahren zu fertigen. Dabei werden einzelne Matten bzw. Bahnen eines Faserwerkstoffes, welcher mit Kunstharz getränkt ist, über eine Form laminiert. Dies weist den Nachteil auf, dass die einzelnen Faserstränge des Faserwerkstoffes nur einmal um den Umfang des Flugzeugrumpfes herum verlaufen, und in einem schmalen Bereich überlappen.

Faserverbundwerkstoffe weisen die Eigenart auf, dass deren Möglichkeit Kräfte aufzunehmen bzw. zu Übertragen wesentlich von dem Verlauf und der Unversehrtheit der einzelnen Faser abhängig ist. Um eine gute Festigkeit in vielen Richtungen zu erzielen, wird daher ein Faserwerkstoff in Form eines sog. multiaxiales Gewebes verwendet. Ein derartiges Gewebe, welches aus in mehreren Richtungen verlaufenden Fasersträngen verwoben ist, weist jedoch den erheblichen Nachteil auf, dass dieses durch den Webvorgang viele Bereiche zwischen den einzelnen sich kreuzenden Fasersträngen aufweist, sog. Crimp-Stellen, deren Verfüllung mit Kunstharz nicht sichergestellt werden kann. Ist jedoch ein Zwischenraum ohne Harz innerhalb des Verbundwerkstoffes angeordnet, wird die in dem Hohlraum befindliche Feuchtigkeit bei den im Betrieb eines modernen Verkehrsflugzeuges zu erwartenden großen Temperaturschwankungen kondensieren sowie gefrieren. Jeder dieser Kondensations- und/oder Gefriervorgang ist mit einer Volumens- und Druckänderung verbunden. Dieser sich bei jedem Steig- und Sinkflug wiederholende Effekt führt zu rapide gesteigerter Materialermüdung. Dieser Effekt tritt bei größeren Hohlräumen in dem Verbundwerkstoff noch verstärkt zutage. Derartiges multiaxiales Gewebe weist zudem ein sehr schlechtes Faser/Harzverhältnis auf.

Um diesem Umstand entgegen zu wirken werden die derart aus einem derartigen Faserwerkstoff hergestellten Rumpfsegmente derzeit in einer sog. Autoklave ausgehärtet, wobei die Verbundwerkstoffkonstruktion unter Vakuum gesetzt wird, um die Hohlräume innerhalb dieser zu beseitigen. Dieses Verfahren ist sehr kostenintensiv, und nur für Bauteile einsetzbar, welche hinsichtlich deren Abmessungen in eine Autoklave passen. Die Abmessungen der Autoklave setzen daher konstruktive Grenzen für die maximale Größe eines Rumpfsegments. Derzeit wird etwa der Durchmesser von Flugzeugrümpfen, welche aus Faserverbundwerkstoffen hergestellt werden können, durch die Abmessungen der größten verfügbaren Autoklave limitiert. Zudem werden durch diesen Verfahrensschritt, welcher bei diesem bekannten Verfahren aus Sicherheitsgründen absolut notwendig ist, die Kosten für das Verfahren deutlich erhöht. So ist es beispielsweise zur Herstellung von Rumpfsegmenten großer Verkehrsflugzeuge eines Herstellers derzeit üblich, ein Rumpfsegment auf einem Kontinent herzustellen, und dann mit einem Großraumfrachtflugzeug über viele tausend Kilometer zu einer Autoklave auf einen anderen Kontinent zu bringen. Dieses Verfahren ist nicht nur kostenintensiv, sondern in Zeiten des globalen Klimawandels und der stetigen Verknappung fossiler Brennstoffe kaum zu vertreten, da eine für zukünftige Generationen unverantwortliche Verschwendung wertvoller Rohstoffe und eine Verschmutzung der Umwelt erfolgt.

Selbst bei Beseitigung sämtlicher Hohlräume in dem Faserverbundwerkstoff weist wie vorstehend beschrieben hergestellter Flugzeugrumpf noch erhebliche weitere Nachteile auf. Durch die hohe Anzahl an Freiräumen bei einem multidirektionalen Gewebe, welche aber alle zwingend mit Kunstharz befüllt sein müssen, weist ein derartiges Gewebe ein sehr schlechtes Verhältnis zwischen Fasern und Harz auf. Teile aus einem derartigen Faserverbundwerkstoff sind daher in Relation zu deren mechanischer Belastbarkeit relativ schwer.

Durch die Fertigung eines Flugzeugrumpfs in Form einzelner Rumpfsegmente ist es, zur Bildung des gesamten Rumpfes erforderlich die einzelnen Segmente zusammenzusetzen. Zum Zusammenbau der einzelnen Segmente werden dabei metallische Verstärkungselemente, sog. Fastener, an dem Faserverbundwerkstoff angebracht. Dies weist eine Reihe von Nachteilen auf. Zur Anbringung der Verstärkungselemente ist es oftmals erforderlich, die Fasern des Faserverbundwerkstoffs an einzelnen Stellen zu durchtrennen, etwa durch Bohren oder Schneiden. Diese durchtrennten Fasern können jedoch keine Kräfte mehr übertragen und sind für die Festigkeit des betreffenden Bauteils nutzlos. Hinzu kommt, dass der Faserverbundwerkstoff und das Metall der Verstärkungselemente deutlich unterschiedliche thermische Ausdehnungskoeffizienten aufweisen. Da - wie bereits dargelegt - ein Flugzeugrumpf erheblichen Temperaturschwankungen ausgesetzt ist, führen die dadurch auftretenden Thermospannungen zu einer weiteren Materialermüdung. Zudem stellt eine Verbindungsstelle zweier Bauteile an sich bereits eine Schwachstelle dar.

Ein weiterer Nachteil der Verwendung metallischer Verstärkungselemente ist, dass bei Anwendung von Kohlenstofffasern keine Bauteile aus Titan verwendet werden können. Dieser an sich hinsichtlich Dichte und Belastbarkeit bevorzugte Werkstoff führt im Verbund mit Kohlenstofffasern zum Auftreten von Kontaktspannungen, wobei durch den stetigen Stromfluss die Werkstoffe an der Kontaktstelle zersetzt werden. Daher müssen Bauteile aus Stahl oder Aluminium eingesetzt werden, wodurch das Gesamtgewicht weiter erhöht wird. Aufgabe der Erfindung ist es daher ein Verfahren der eingangs genannten Art anzugeben, mit welchem die genannten Nachteile vermieden werden können, mit welchem einfach, schnell und kostengünstig ein, auch großvolumiger, Hohlraum gebildet werden kann, welcher in Relation zu dessen Größe ein geringes Gewicht und eine hohe mechanische Belastbarkeit aufweist.

Erfindungsgemäß wird dies durch die Merkmale des Patentanspruches 1 erreicht.

Dadurch kann einfach, schnell und kostengünstig ein, auch großvolumiger, Hohlraum gebildet werden, welcher in Relation zu dessen Größe ein geringes Gewicht und eine hohe mechanische Belastbarkeit aufweist. Durch das erfindungsgemäße Verfahren kann ein Hohlkörper, insbesondere ein Flugzeugrumpf oder ein Tank, etwa für Flüssigkeiten oder Gase, gebildet werden, welcher in einem Stück gefertigt werden kann, wobei eine derartige Fertigung in einem Stück auch bei großen Einheiten, wie etwa dem Rumpf eines Großraumflugzeuges problemlos möglich ist. Durch die Herstellung in einem einzigen Stück bzw. Bauteil kann auf zusätzliche, insbesondere metallische, Verbindungsmittel verzichtet werden. Durch den Verzicht auf zusätzliche Verbindungsmittel sowie das Zusammensetzen mehrerer Segmente ist es nicht erforderlich die Faserstränge des Faserwerkstoffes zu durchtrennen, wodurch die vollen Vorteile von Faserverbundwerkstoffen ausgenützt werden können. Dadurch wird nicht nur Gewicht eingespart, der erfindungsgemäß hergestellte Hohlkörper weist auch weniger Schwachstellen und dadurch eine bessere Belastbarkeit sowie längere Lebensdauer auf.

Durch das schraublinienförmige Wickeln der Lagen der Innenschicht kann weiters auf die Verwendung multiaxialen Gewebes verzichtet werden, da die einzelnen Lagen in unterschiedlichen Arbeitsschritten beim Aufbau der Innenschicht in jeweils unterschiedlichen Winkeln gewickelt werden können, besteht die Möglichkeit durch den derartigen Aufbau eine Innenschicht zu bilden, welche Faserstränge aufweist, welche in allen erforderlichen vorgebbaren Richtungen verlaufen. Daher kann ein Hohlkörper gemäß dem erfindungsgemäßen Verfahren aus im Wesentlichen unidirektionalem Gewebe aufgebaut werden. Die Verwendung eines derartigen Gewebes, bei welchem im Wesentlichen sämtliche Faserstränge parallel zur Längserstreckung einer Bahn des Gewebes angeordnet ist, hat die Vorteile, dass ein derartiges Gewebe deutlich kostengünstiger ist, als ein multidirektionales Gewebe, und zudem deutlich weniger schwer zugängliche Bereiche zwischen den einzelnen Fasersträngen. Ein unidirektionales Gewebe weist kaum Kreuzungspunkte von Fasersträngen auf. Da die meisten Faserstränge parallel angeordnet sind, können diese leicht von Harz durchdrungen werden. Zudem kann unidirektionales Gewebe sehr erfolgreich mit Rollen und Pressen laminiert werden. Durch eine vollständige Benetzung können die Nachteile bei Crimp-Stellenvermindert werden, da die Handhabung unidirektionalen Gewebes einfacher ist. Ein entsprechend gebildeter Hohlkörper wird daher deutlich weniger bzw. keine Hohlräume innerhalb des Faserverbundwerkstoffes aufweisen. Zudem ist gemäß dem erfindungsgemäßen Verfahren vorgesehen, dass die Innenschicht entsprechend ausgebildet wird. Daher selbst wenn eine geringe Anzahl an Hohlräumen in dem Faserverbundwerkstoff auftreten sollten, sind diese nicht denselben Temperaturwechseln ausgesetzt, wie bei herkömmlichen Konstruktionen, bei welchen die Außenhaut eines Flugzeugs derart aufgebaut ist. Aus der Fülle der genannten Gründe kann daher bei einem entsprechend dem erfindungsgemäßen Verfahren hergestellten Hohlkörper auf eine Behandlung in einer Autoklave verzichtet werden. Zudem weist ein solcherart gebildeter Hohlkörper ein deutlich besseres Harz/Faser-Verhältnis auf als ein aus multidirektionalem Gewebe gebildeter vergleichbarer Hohlkörper, und folglich ein deutlich geringeres Gewicht bei gleichem Volumen sowie besserer Festigkeit, und geringerer Anfälligkeit gegen Temperaturwechsel, sowie geringerer Materialermüdung. Durch den Verzicht auf die Behandlung in einer Autoklave kann auch auf den kostenintensiven und umweltschädigenden Luftfrachttransport von Einzelsegmenten verzichtet werden.

Durch die bevorzugte Ausbildung der Innenschicht als tragende Innenschicht kann weiters die Außenschicht sehr dünnwandig gehalten werden, da diese lediglich zur Formgebung, bzw. zum Schutz einer Isolierschicht erforderlich ist. Dies weist den Vorteil auf, dass Beschädigungen der Außenschicht keine Schwächung der tragenden Struktur bedeuten und sehr einfach reparabel sind.

Gemäß dem erfindungsgemäßen Verfahren hergestellte Flugzeugrümpfe weisen gegenüber herkömmlich hergestellten Flugzeugrümpfen eine erheblich bessere CO₂-Bilanz auf. Zudem sind diese leichter, weshalb ein Flugzeug mit einem derartigen Rumpf weniger Treibstoff benötigt, und neben geringen Herstellungs- und folglich auch Anschaffungskosten, auch geringere Betriebskosten aufweist, verbunden mit einer höheren Betriebssicherheit.

Die Unteransprüche, welche ebenso wie der Patentanspruch 1 gleichzeitig einen Teil der Beschreibung bilden, betreffen weitere vorteilhafte Ausgestaltungen der Erfindung.

Die Erfindung betrifft weiters einen Hohlkörper gemäß dem Oberbegriff des Patentanspruches 12.

Die Nachteile von Hohlkörpern, insbesondere von Flugzeugrümpfen, gemäß dem Stand der Technik wurden eingangs ausführlich dargelegt.

Aufgabe der Erfindung ist es daher einen Hohlkörper der vorstehend genannten Art anzugeben, mit welchem die eingangs genannten Nachteile vermieden werden können, welcher einfach, schnell und kostengünstig, auch in großen Dimensionen, hergestellt werden kann, und welcher in Relation zu dessen Größe ein geringes Gewicht und eine hohe mechanische Belastbarkeit aufweist.

Erfindungsgemäß wird dies durch die Merkmale des Patentanspruches 12 erreicht.

Dadurch können die vorstehend zu dem erfindungsgemäßen Verfahren dargelegten Vorteile erzielt werden.

Die Unteransprüche, welche ebenso wie der Patentanspruch 12 gleichzeitig einen Teil der Beschreibung bilden, betreffen weitere vorteilhafte Ausgestaltungen der Erfindung.

Die Erfindung betrifft weiters eine Vorrichtung zur Herstellung eines mit Harz wenigstens benetzten Faserwerkstoffes gemäß dem Oberbegriff des Patentanspruches 15.

Es ist bekannt, Faserwerkstoffe mit Harz zu tränken bzw. wenigstens zu benetzen. Die bekannten Verfahren weisen allerdings die Nachteile eine in der Regel nur ungenügenden Benetzung im Wesentlichen sämtlicher Fasern des Faserwerkstoffes auf, sodass in der Regel in dem Faserwerkstoff Bereich zurück bleiben in welchen kein Harz angeordnet ist. Derartige Bereiche stellen Schwachstellen eines Faserverbundwerkstoffes dar, wie eingangs bereits ausführlich dargelegt.

Aufgabe der Erfindung ist es daher eine Vorrichtung der vorstehend genannten Art anzugeben, mit welcher die genannten Nachteile vermieden werden können, mit welcher eine gute Benetzung bzw. Durchdringung des Faserwerkstoffes mit dem Harz erzielt wird. Erfindungsgemäß wird dies durch die Merkmale des Patentanspruches 15 erreicht.

Dadurch kann in einem kontinuierlichen Verfahren eine gute Benetzung bzw. eine Durchdringung eines Faserwerkstoffes mit Harz erzielt werden. Durch das wiederholte Eintauchen, verbunden mit den dazwischenliegenden Phasen, in welchen der Faserwerkstoff außerhalb des Harzes angeordnet ist, kann erreicht werden, dass das Harz genug Zeit hat, um in die Zwischenräume des Faserwerkstoffes einzudringen.

Die Erfindung wird unter Bezugnahme auf die beigeschlossenen Zeichnungen, in welchen lediglich eine bevorzugte Ausführungsform beispielhaft dargestellt ist, näher beschrieben. Dabei zeigt:
Fig. 1 einen ersten Schritt eines erfindungsgemäßen Verfahrens in einer ersten axonometrischen Ansicht;
Fig. 2 einen ersten Teil einer bevorzugten Anordnung zur Durchführung des erfindungsgemäßen Verfahrens in axonometrischer Ansicht;
Fig. 3 einen zweiten Teil einer bevorzugten Anordnung zur Durchführung des erfindungsgemäßen Verfahrens im Aufriss
Fig. 4 den Teil gemäß Fig. 3 in axonometrischer Ansicht;
Fig. 5 eine Ansicht einer erfindungsgemäßen Hohlkörpers mit drei Teilen gemäß Fig. 3 in axonometrischer Ansicht;
Fig. 6 eine Vorrichtung zur Herstellung eines mit Harz wenigstens benetzten Faserwerkstoffes in axonometrischer Ansicht;
Fig. 7 der erste Schritt des erfindungsgemäßen Verfahrens in einer zweiten axonometrischen Ansicht;
Fig. 8 einen zweiter Schritt eines erfindungsgemäßen Verfahrens in einer ersten axonometrischen Ansicht;
Fig. 9 einen dritten Schritt eines erfindungsgemäßen Verfahrens in einer axonometrischen Ansicht;
Fig. 10 einen erfindungsgemäßen Hohlraum nach dem dritten Schritt eines erfindungsgemäßen Verfahrens im Seitenriss;
Fig. 11 Schnitt A - A gemäß Fig. 10 im Aufriss;
Fig. 12 Detail A gemäß Fig. 11 im Aufriss;
Fig. 13 Detail B gemäß Fig. 11 im Auf- und Seitenriss;
Fig. 14 einen erfindungsgemäßen Hohlraum während eines vierten Schrittes eines erfindungsgemäßen Verfahrens in axonometrischer Ansicht;
Fig. 15 einen erfindungsgemäßen Hohlraum nach dem vierten Schritt eines erfindungsgemäßen Verfahrens im Seitenriss;
Fig. 16 Schnitt B - B gemäß Fig. 15 in axonometrischer Ansicht;
Fig. 17 Detail C gemäß Fig. 16 im Aufriss;
Fig. 18 Schnitt C - C gemäß Fig. 17 im Seitenriss, mit zwei verbundenen Außenschichtelementen;
Fig. 19 die Außenschichtelemente gemäß Fig. 18 vor deren Zusammenbau;
Fig. 20 Detail D gemäß Fig. 16 im Aufriss, mit zwei verbundenen Außenschichtelementen;
Fig. 21 die Außenschichtelemente gemäß Fig. 20 vor deren Zusammenbau
Fig. 22 Schnittdarstellung eines erfindungsgemäßen Hohlkörpers nach dem Ausschäumen;
Fig. 23 Detail E gemäß Fig. 22 im Aufriss;
Fig. 24 Schnitt E - E gemäß Fig. 23 im Seitenriss;
Fig. 25 Detail F gemäß Fig. 22 im Aufriss;
Fig. 26 eine Profilauskreuzung in axonometrischer Ansicht;
Fig. 27 einen erfindungsgemäßen Hohlraum nach dem Einbau vorgebbarer Einbauten in den Innenraum in axonometrischer Ansicht;
Fig. 28 einen erfindungsgemäßen Hohlraum in axonometrischer Ansicht, fertig zum Aushärten; und
Fig. 29 einen erfindungsgemäßen Hohlraum in axonometrischer Ansicht nach Ausschneiden der Tür- und Fensteröffnungen.

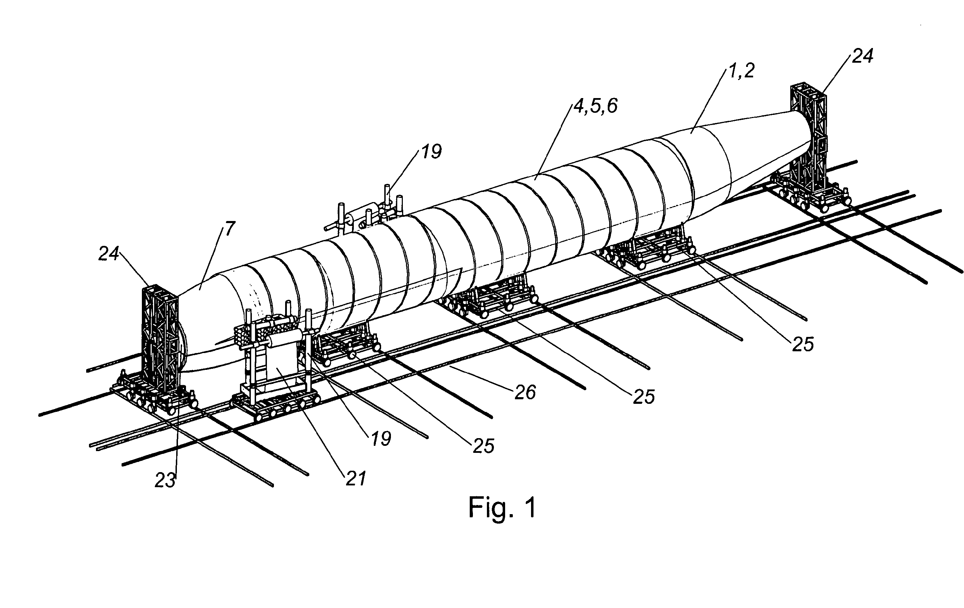

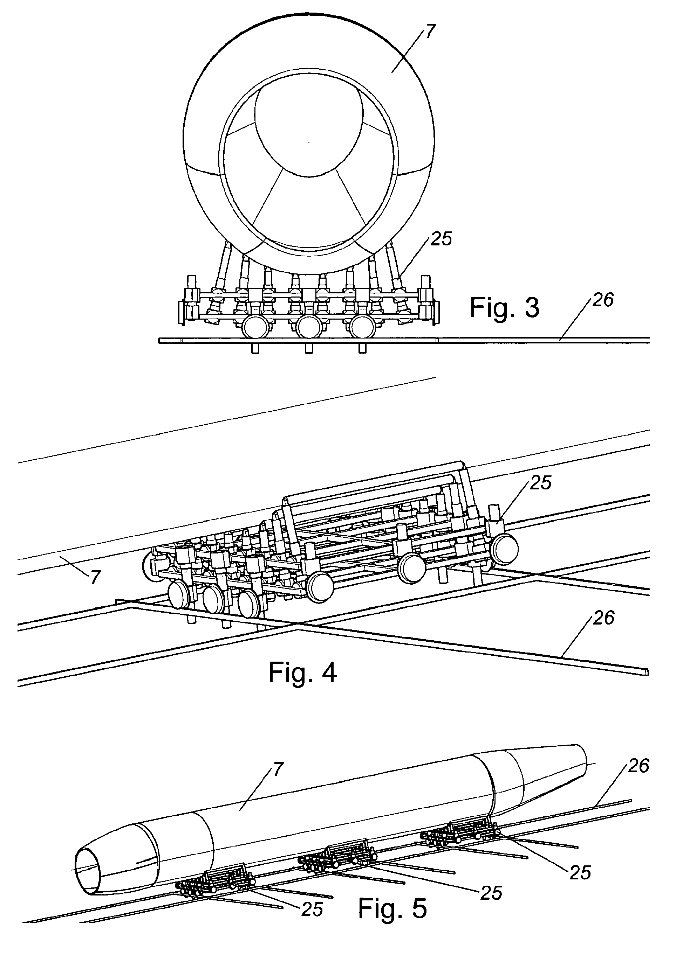

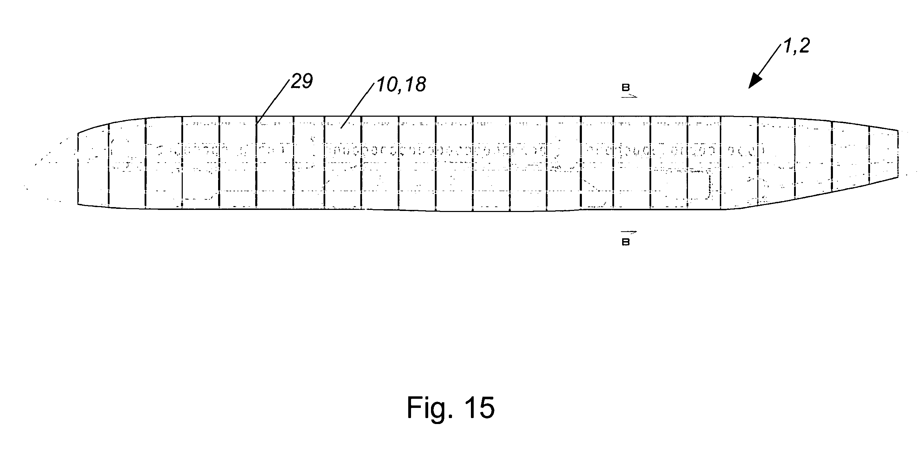

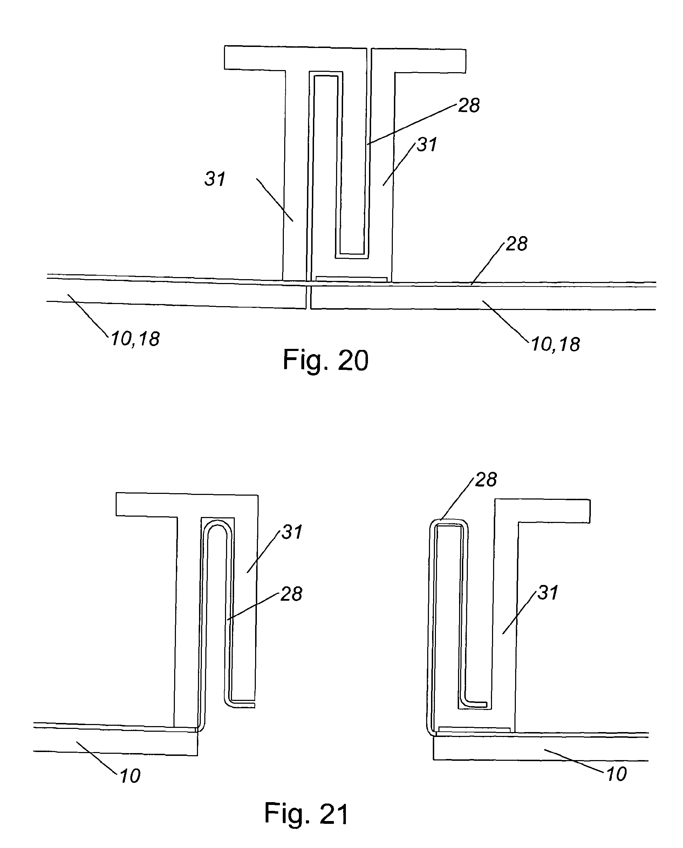

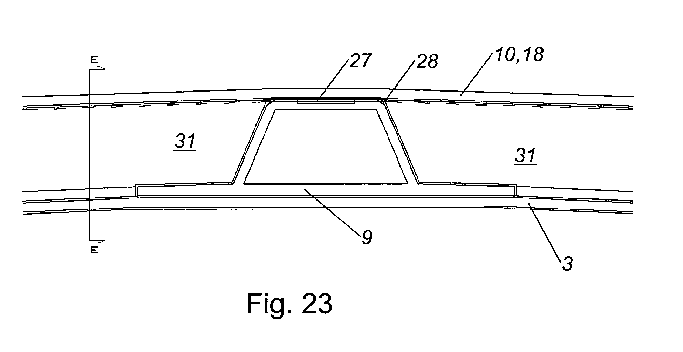

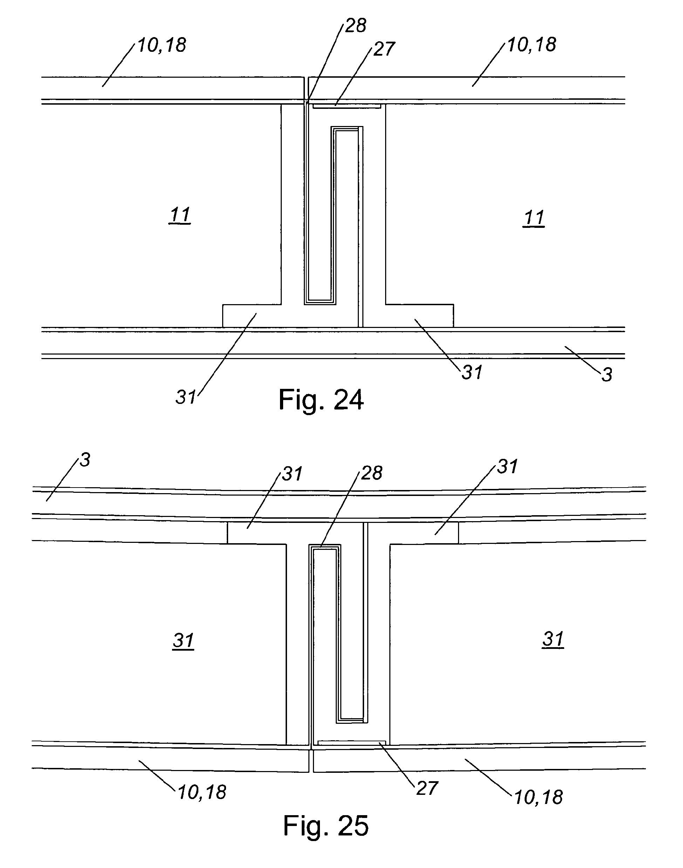

Die Fig. 1 bis 29 zeigen einzelne Schritte eines bevorzugten Verfahrens zur Herstellung eines - als Sandwichkonstruktion ausgebildeten - Hohlkörpers 1, welcher in den Figuren in dessen bevorzugter Ausführungsform als Flugzeugrumpf 2 dargestellt ist, wobei eine Innenschicht 3 aus einer vorgebbaren Anzahl an Lagen 4 eines vorgebbaren wenigstens harzbenetzten Faserwerkstoffes 5, insbesondere umfassend Kohlenstofffasern, gebildet wird, wobei wenigstens eine erste Lage 6 der Innenschicht 3 schraublinienförmig und - im Wesentlichen über eine gesamte Länge des Hohlkörpers 1 - unterbrechungsfrei angeordnet wird.

Weiters zeigen diese Figuren einen Hohlkörper 1, bzw. Details eines Hohlkörper sowie teilweise fertig gestellte Hohlkörper in der bevorzugten Form eines Flugzeugrumpfs 2, welcher im Wesentlichen als Sandwichkonstruktion ausgebildet ist, umfassend eine - einem Innenraum 15 des Hohlkörpers 1 zugewandte - Innenschicht 3, welche wenigstens eine erste Lage 6 eines vorgebbaren Faserverbundwerkstoffes 5, insbesondere umfassend Kohlenstofffasern, umfasst, wobei wenigstens die erste Lage 6 des Faserverbundwerkstoffes 5 schraublinienförmig und - im Wesentlichen über eine gesamte Länge des Hohlkörpers 1 - unterbrechungsfrei angeordnet ist, und wobei die Innenschicht 3 vorzugsweise als - wenigstens umfangsseitig - im Wesentlichen alleinig tragende Schicht der Sandwichkonstruktion ausgebildet ist.

Dadurch kann einfach, schnell und kostengünstig ein, auch großvolumiger, Hohlraum 1 gebildet werden, welcher in Relation zu dessen Größe ein geringes Gewicht und eine hohe mechanische Belastbarkeit aufweist. Durch das erfindungsgemäße Verfahren kann ein Hohlkörper 1, insbesondere ein Flugzeugrumpf 2 oder ein Tank, etwa für Flüssigkeiten oder Gase, gebildet werden, welcher in einem Stück gefertigt werden kann, wobei eine derartige Fertigung in einem Stück auch bei großen Einheiten, wie etwa dem Rumpf eines Großraumflugzeuges problemlos möglich ist. Durch die Herstellung in einem einzigen Stück bzw. Bauteil kann auf zusätzliche, insbesondere metallische, Verbindungsmittel verzichtet werden. Durch den Verzicht auf zusätzliche Verbindungsmittel sowie das Zusammensetzen mehrerer Segmente, ist es nicht erforderlich die Faserstränge des Faserwerkstoffes zu durchtrennen, wodurch die vollen Vorteile von Faserverbundwerkstoffen ausgenützt werden können. Dadurch wird nicht nur Gewicht eingespart, der erfindungsgemäß hergestellte Hohlkörper 1 weist auch weniger Schwachstellen und dadurch eine bessere Belastbarkeit sowie längere Lebensdauer auf.

Durch das schraublinienförmige Wickeln der Lagen 4 der Innenschicht 3 kann weiters auf die Verwendung multiaxialen Gewebes verzichtet werden, da die einzelnen Lagen 4 in unterschiedlichen Arbeitsschritten beim Aufbau der Innenschicht 3 in jeweils unterschiedlichen Winkeln gewickelt werden können, besteht die Möglichkeit durch den derartigen Aufbau eine Innenschicht 3 zu bilden, welche Faserstränge aufweist, welche in allen erforderlichen vorgebbaren Richtungen verlaufen. Daher kann ein Hohlkörper 1 gemäß dem erfindungsgemäßen Verfahren aus im Wesentlichen unidirektionalem Gewebe aufgebaut werden. Die Verwendung eines derartigen Gewebes, bei welchem im Wesentlichen sämtliche Faserstränge parallel zur Längserstreckung einer Bahn 21 des Gewebes angeordnet ist, hat die Vorteile, dass ein derartiges Gewebe deutlich kostengünstiger ist, als ein multidirektionales Gewebe, und zudem deutlich weniger Bereiche zwischen den einzelnen Fasersträngen aufweist, welche für das Harz schwer zugänglich sind. Ein unidirektionales Gewebe weist kaum Kreuzungspunkte von Fasersträngen auf. Da die meisten Faserstränge parallel angeordnet sind, können diese leicht von Harz durchdrungen werden. Zudem kann unidirektionales Gewebe sehr erfolgreich mit Rollen und Pressen laminiert werden. Durch eine vollständige Benetzung können die Nachteile bei Crimp-Stellenvermindert werden, da die Handhabung unidirektionalen Gewebes einfacher ist. Ein entsprechend gebildeter Hohlkörper 1 wird daher deutlich weniger bzw. keine Hohlräume innerhalb des Faserverbundwerkstoffes aufweisen. Zudem ist gemäß dem erfindungsgemäßen Verfahren vorgesehen, dass die Innenschicht 3 entsprechend ausgebildet wird. Daher selbst wenn eine geringe Anzahl an Hohlräumen in dem Faserverbundwerkstoff auftreten sollten, sind diese nicht denselben Temperaturwechseln ausgesetzt, wie bei herkömmlichen Konstruktionen, bei welchen Teile der Außenhaut eines Flugzeugs derart aufgebaut sind. Aus der Fülle der genannten Gründe kann daher bei einem entsprechend dem erfindungsgemäßen Verfahren hergestellten Hohlkörper 1 auf eine Behandlung in einer Autoklave verzichtet werden. Zudem weist ein solcherart gebildeter Hohlkörper 1 ein deutlich besseres Harz/Faser-Verhältnis auf als ein aus multidirektionalem Gewebe gebildeter vergleichbarer Hohlkörper, und folglich ein deutlich geringeres Gewicht bei gleichem Volumen sowie besserer Festigkeit, und geringerer Anfälligkeit gegen Temperaturwechsel, sowie geringerer Materialermüdung. Durch den Verzicht auf die Behandlung in einer Autoklave kann auch auf den kostenintensiven und umweltschädigenden Luftfrachttransport von Einzelsegmenten verzichtet werden.

Durch die bevorzugte Ausbildung der Innenschicht 1 als tragende Innenschicht kann weiters die Außenschicht 18 sehr dünnwandig gehalten werden, da diese lediglich zur Formgebung, bzw. zum Schutz einer Isolierschicht erforderlich ist. Dies weist den Vorteil auf, dass Beschädigungen der Außenschicht 18 keine Schwächung der tragenden Struktur bedeuten und sehr einfach reparabel sind.

Gemäß dem erfindungsgemäßen Verfahren hergestellte Flugzeugrümpfe 2 weisen gegenüber herkömmlich hergestellten Flugzeugrümpfen eine erheblich bessere CO₂-Bilanz auf. Zudem sind diese leichter, weshalb ein Flugzeug mit einem derartigen Rumpf weniger Treibstoff benötigt, und neben geringen Herstellungs- und folglich auch Anschaffungskosten, auch geringere Betriebskosten aufweist, verbunden mit einer höheren Betriebssicherheit.

Bei einem Hohlraum 1 im Sinne der gegenständlichen Erfindung kann es sich um jede Art eines Hohlraumes 1 handeln. Insbesondere ist vorgesehen, dass ein erfindungsgemäßer Hohlraum 1 einen Druckkörper bildet bzw. einen, vorzugsweise wesentlichen Teil, eines Druckkörpers, etwa dessen vollständige Seitenwandung, etwa bei einem im Wesentlichen zylindrischen Druckkörper. Gemäß besonders bevorzugter Ausführungsformen ist vorgesehen, dass ein erfindungsgemäßer Hohlkörper 1 bzw. ein gemäß dem erfindungsgemäßen Verfahren gebildeter Hohlkörper 1 als Drucktank, Flugzeugrumpf 2 oder Untersehbootdruckkörper ausgebildet ist. Die wesentlichen Vorteile der im Weiteren detailliert beschriebenen besonders bevorzugten Ausbildung des Hohlkörpers 1 als Flugzeugrumpf 2 wurden vorstehend bereits ausgeführt. Die Vorteile bei Ausbildung des Hohlkörpers 1 als Drucktank ergeben sind aus diesen. Bei Ausbildung des Hohlkörpers 1 als Untersehbootdruckkörper ergeben sich - insbesondere bei militärischen Anwendungen - als weitere Vorteile die gute Schalldämmung sowie das Fehlen metallischer Teile in der Konstruktion, wodurch ein derartiger Untersehbootdruckkörper keine magnetischen Anomalien des Erdmagnetfeldes verursacht, und weniger leicht aufspürbar ist.

Nachfolgend wird eine besonders bevorzugte Ausbildung eines gegenständlichen erfindungsgemäßen Verfahrens zur Herstellung eines Hohlkörpers 1 am bevorzugten Beispiel der Herstellung eines Flugzeugrumpfes 2 im Detail beschrieben.

Ein erfindungsgemäßer Hohlkörper 1 ist als Sandwichkonstruktion ausgebildet, daher als mehrschichtiger Bauteil, welcher wenigstens eine Innenschicht 3 und wenigstens eine Außenschicht 18 aufweist, wobei zwischen den beiden Schichten 3, 18 eine Zwischenschicht angeordnet ist. Die Innenschicht 3 und die Außenschicht 18 sind dabei umfassend Faserwerkstoff ausgebildet. Die Zwischenschicht ist bevorzugt umfassend Kunststoffschaum ausgebildet.

Als Faserwerkstoff kann jeder Faserwerkstoff umfassend natürliche oder künstlich hergestellte Fasern, vorgesehen sein, bevorzugt umfassend Glasfasern, Aramidfasern, Kohlefasern und/oder Polyesterfasern, wobei insbesondere auch Mischungen einzelner oder mehrerer der vorgenanten Fasern in einem Faserwerkstoff und/oder der Innen- bzw. Außenschicht 3, 18 vorgesehen sein kann. Bevorzugt ist vorgesehen, dass der Faserwerkstoff in Form eines unidirektionalen Gewebes verarbeitet wird. Bei einem derartigen Gewebe, welches in Form von Bahnen mit derzeit max. ca. 2,4 m Breite verfügbar ist, sind die meisten Fasern parallel zueinander in Längsrichtung der Bahn angeordnet. Nur eine sehr geringe Anzahl weiterer Fasern dient dazu, dass die einzelnen in Längsrichtung verlaufenden Fasern deren Platz in dem Gewebe beibehalten und nicht verschoben werden.

Es ist vorgesehen, dass der Faserwerkstoff zu dessen Verarbeitung mit einem Harz, insbesondere einem Kunstharz, wie etwa Polyesterharz und/oder Epoxidharz, wenigstens benetzt wird. Der Ausdruck wenigstens "benetzt" bezeichnet dabei bevorzugt den Zustand, bei welchem genau die minimal zur Verarbeitung des Faserwerkstoffes erforderliche Menge Harz mit dem Faserwerkstoff verbunden ist, bzw. sich auf diesem befindet.

Erfindungsgemäß ist vorgesehen, dass die erste Lage 6 der Innenschicht 3 schraublinienförmig und - im Wesentlichen über eine gesamte Länge des Hohlkörpers 1 - unterbrechungsfrei angeordnet wird, wobei besonders bevorzugt vorgesehen ist, dass die Innenschicht 3 als - wenigstens umfangsseitig - im Wesentlichen alleinig tragende Schicht der Sandwichkonstruktion ausgebildet wird. Daher weist die Innenschicht 3 derart viele Lagen 4 des Faserwerkstoffes 5 auf, dass die Innenschicht 3 als solche bereits in der Lage ist, die im Betrieb zu erwartenden Drücke aufzunehmen. Bei einem Verkehrsflugzeug ergibt sich dieser Druckunterschied, welcher durch die Innenschicht 3 aufgenommen werden können muss, aus dem Unterschied des Kabineninnendrucks bei Reiseflughöhe, in der Regel der äquivalente Druck zu einer Höhe zwischen 1400 und 2400 Meter über Normalnull, und dem Umgebungsdruck bei der geplanten Reiseflughöhe. Hinzu kommen weitere durch Normen und Regelwerke, wie etwa den FAA-Regulations, vorgeschriebene Sicherheiten. Es ist daher je geplanten Einsatzzweck eine unterschiedliche Anzahl an Lagen 4 der Innenschicht 3 vorzusehen. Hinzu kommt die weitere Belastung durch die Beschleunigungs- und Gewichtskräfte. Hiezu ist jedoch vorgesehen, dass - wie an späterer Stelle ausführlich dargelegt - weitere strukturelle Elemente hinzukommen.

Gemäß dem erfindungsgemäßen Verfahren ist vorgesehen im Wesentlichen den gesamten Hohlkörper 1, daher im gegenständlichen Fall Flugzeugrumpf 2, in einem Stück erfindungsgemäß herzustellen. Wie in den Figuren ersichtlich, wird daher bis auf die äußersten Enden des Flugzeugrumpfes 2, daher dem letzten Schwanz des Flugzeugrumpfes 2, sowie dem Cockpitbereich bzw. dem Radom, der gesamte Flugzeugrumpf 2 in einem Stück unterbrechungsfrei hergestellt.

In weitere Folge wird die Bildung eines Flugzeugrumpfes 2 beschrieben, wobei ohne Einschränkung die jeweilig erforderlichen Verfahrensschritte auf die Herstellung jedes anderen erfindungsgemäßen Hohlkörpers 1 angewandt werden kann.

Zur Bildung der Innenschicht 3 ist vorgesehen, dass die erste Lage 6 der Innenschicht 3 auf eine, vorzugsweise wenigstens umfangsseitig wenigstens bereichsweise konvexe, Form 7, durch vorzugsweise kontinuierliche Drehung der Form 7 um eine Drehachse 8 und Vorbewegung des wenigstens harzbenetzten Faserwerkstoffes 5 im Wesentlichen parallel zu einer Drehachse 8 der Form 7, aufgebracht wird. Bevorzugt kann jeder Querschnitt vorgesehen sein, welcher aus konvexen und/oder geraden Linien zusammengesetzt werden kann. Fig. 1 zeigt eine entsprechende Anordnung zur Bildung eines Flugzeugrumpfes 2, wobei eine Form an deren Enden drehbar aufgehängt ist.

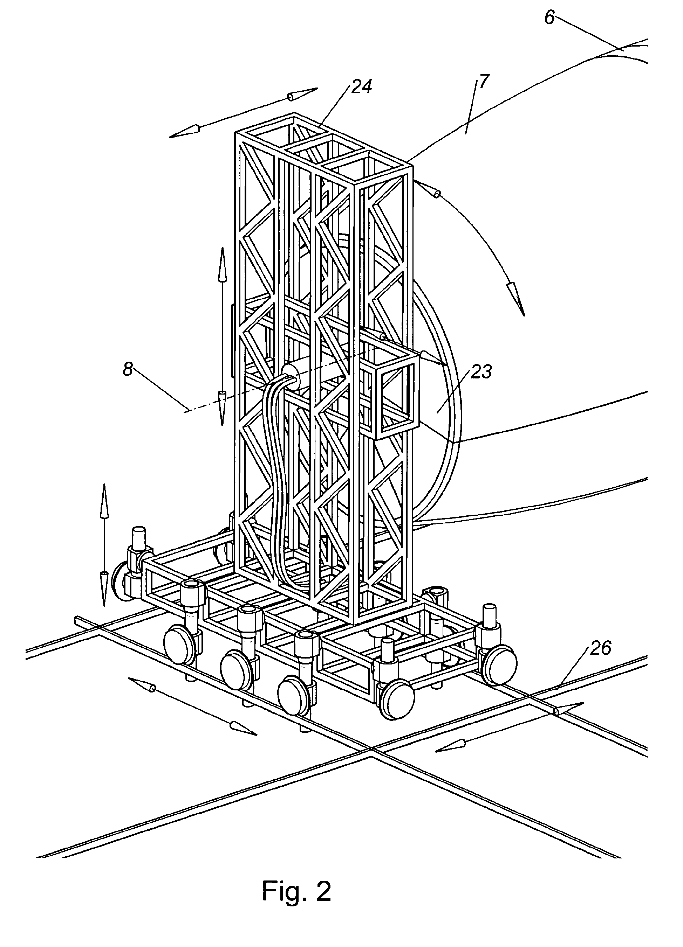

Die Form 7 kann als jede Art einer Form 7 ausgebildet sein, welche ein Entfernen Selbiger aus dem Inneren eines im Wesentlichen fertiggestellten Flugzeugrumpfes 2 ermöglich. Bevorzugt ist vorgesehen, dass die Form 7 als aufblasbarer bzw. im Betrieb aufgeblasener Hohlkörper ausgebildet ist. Dabei ist bevorzugt vorgesehen, dass die Form mit hohem Druck beaufschlagt ist, um Durchbiegungen derselben weitestgehend zu vermeiden. Um Durchbiegungen der Form weiter zu reduzieren, kann vorgesehen sein, diese mit einem Gas leichter als Luft, etwa Helium, zu befüllen. Die Form 7 ist besonders bevorzugt umfassend ein an dessen Außenseite silikonimprägniertes Glasfasergewebe ausgebildet. Durch die Silikonimprägnierung ist ein gutes Ablösen von der Oberfläche der Innenschicht 3 zu erwarten und zudem wird dadurch bereits - bei entsprechender Oberflächengüte der Form 7 - eine glatte innere Oberfläche des Flugzeugrumpfes 2 erzeugt. Dadurch kann diese Fläche etwa ohne weitere Nachbearbeitung als Innenfläche des Flugzeugrumpfes 2 dienen. Durch das Glasfasergewebe ist es weiters möglich, die Form 7 zu deren Entfernen aus dem Flugzeugrumpf 2 zu entlüften, und geringfügig zusammenzufalten bzw. von der Innenschicht abzuziehen. Die Form 7 weist an deren Enden jeweils einen Flansch 23 auf, welcher, wie in Fig. 2 dargestellt an einer - vorzugsweise verstellbaren - Trägervorrichtung 24 drehbar befestigt wird. Durch die Verwendung eines Glasfasergewebes kann eine sehr leichte aber trotzdem stabile und vor allem torsions- bzw. verwindungssteife Form 7 geschaffen werden. Es wird erwartet, dass die Masse für eine derartige Form 7 mit einer Länge von 60 m zwischen 400 kg und 600 kg liegt.

Da ein bereichsweises Durchhängen der Form 7 trotz des Glasfasergewebes und dem Aufblasen der Form 7, insbesondere bei längeren Flugzeugrümpfen 2, naturgemäß wie bei jedem langen Gegenstand, nicht verhindert werden kann, sind, wie in Fig. 1, 3, 4 und 5 dargestellt eine vorgebbare Anzahl an Rollenstützlagern 25 vorgesehen. Die Trägervorrichtungen 24 und die Rollenstützlager 25 sind zu deren Positionierung bevorzugt auf Schienen 26 beweglich gelagert.

Durch die Rollenstützlager 25 kann ein weitere Effekt erzielt werden. Diese weisen eine Reihe der Form 7 zugewandte Anpressrollen auf, wodurch beim Laminiervorgang der Faserwerkstoff 5 noch zusätzlich gegen die Form 7 bzw. eine zuvor aufgebrachte Lage 4 gepresst wird. Durch diesen zusätzlichen Pressvorgang kann die Dichte der aufgebrachten Lage weiter erhöht werden. Bevorzugt ist zudem vorgesehen, die Rollenstützlager 25 während der Laminiervorgangs entlang der Längsachse zu bewegen, damit im Wesentlichen sämtliche Bereiche der Hohlkörpers durch die Rollenstützlager 25 zusätzlich angepresst werden. Bevorzugt ist vorgesehen, dass bei einer Länge der Hohlköpers von etwa 60 m drei Rollenstützlager 25 vorgesehen sind, welche jeweils 4 m lang sind.

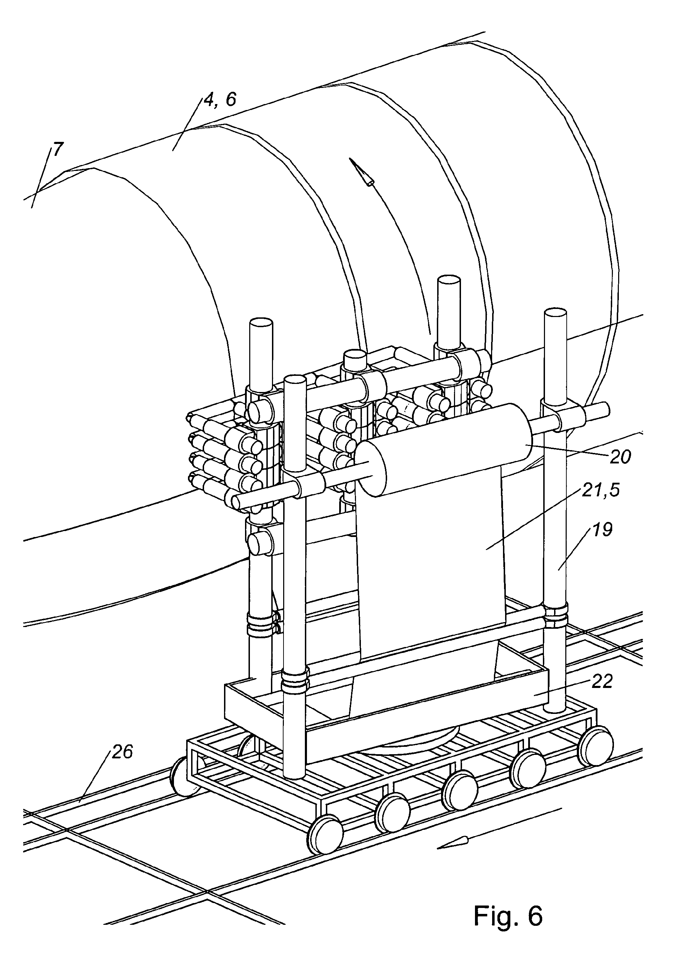

Zum Aufbringen des Faserwerkstoffes 5 auf die Form 7 bzw. bei weiteren Lagen 4 auf die jeweils untere Lage 4 eines zuvor verarbeiteten Faserwerkstoffes 5 ist bevorzugt eine Vorrichtung 19 vorgesehen, wie diese etwa in Fig. 6 im Detail dargestellt ist. Eine derartige Vorrichtung 19 zur Herstellung eines mit Harz wenigstens benetzten Faserwerkstoffes 5 weist wenigstens eine Aufbewahrungsanordnung 20 für eine Bahn 21 eines unbenetzten Faserwerkstoffs 5 auf, sowie wenigstens ein Gefäß 22 zur Aufnahme einer vorgebbaren Menge Harz. Weiters ist diese Vorrichtung 19 bevorzugt ebenfalls auf Schienen 26 antreibbar beweglich gelagert, wodurch ein vorgebbarer Vorschub des Faserwerkstoffes 5 erzielt werden kann. Um eine möglichst gute Benetzung des Faserwerkstoffes 5 mit Harz zu erreichen ist vorgesehen, dass die Vorrichtung 19 zum wiederholten Eintauchen wenigstens eines ersten Bereichs der Bahn 21 des Faserwerkstoffes 5 in das Harz ausgebildet ist. Die Vorrichtung 19 weist hiezu eine vorgebbare Anzahl an Umlenkrollen auf, wobei jede zweite Umlenkrolle derart im Gefäß angeordnet ist, dass diese Umlenkrolle bei einem entsprechend harzgefüllten Gefäß im Harz eingetaucht sind, und wobei die, jeweils zwischen diesen Umlenkrollen angeordneten weiteren Umlenkrollen außerhalb des Harzes angeordnet sind. Dadurch kann in einem kontinuierlichen Verfahren eine gute Benetzung bzw. eine Durchdringung eines Faserwerkstoffes 5 mit Harz erzielt werden. Das Gefäß 21 weist weiters bevorzugt eine Heizvorrichtung auf, um das Harz durch Erwärmen dünnflüssig zu machen, wodurch dieses ebenfalls leichter in den Faserwerkstoff eindringen kann. Durch das wiederholte Eintauchen, verbunden mit den dazwischenliegenden Phasen, in welchen der Faserwerkstoff 5 außerhalb des Harzes angeordnet ist, kann erreicht werden, dass das Harz genug Zeit hat, um in die Zwischenräume des Faserwerkstoffes 5 einzudringen.

Die Vorrichtung 19 zur Herstellung eines mit Harz wenigstens benetzten Faserwerkstoffes 5 weist weiters bevorzugt eine Pressrollenanordnung auf, um überschüssiges Harz aus dem Faserwerkstoff 5 zu entfernen, bevor dieser auf die Form 7 bzw. eine Lage 4 der Innenschicht 3 aufgebracht wird. Weiters können Anpressrollen vorgesehen sein, um den wenigstens benetzten Faserwerkstoff 5 gegen die Form 7 bzw. eine Lage 4 der Innenschicht 3 zu pressen. Besonders bevorzugt sind weiters Walzen vorgesehen, welche jeweils wenigstens einen Schneckengang aufweisen, wobei bevorzugt eine paarweise rechts/linksgängige Anordnung derartiger Schnecken vorgesehen sind, welche ebenfalls den Faserwerkstoff 5 gegen die Form 7 drücken. Durch derartige Walzen mit Schneckengang kann eine Lage 4 besonders gut entlüftet werden, daher werden in der Lage möglicherweise noch vorhandene Lufteinschlüsse aus dieser entfernt. Durch die erfindungsgemäße Vorrichtung 19 kann einfach und genau ein vorgebbares Faser/Harz-Verhältnis in den Lagen 4 erreicht werden. Bevorzugt ist vorgesehen, dass das Faser/Harz-Verhältnis etwa 70/30 beträgt.

Die Vorrichtung 19 zur Herstellung eines mit Harz wenigstens benetzten Faserwerkstoffes 5 ist zum schraublinienförmigen Aufbringen einer Bahn 21 eines Faserwerkstoffes 5 auf die Form 7 ausgebildet. Bevorzugt ist vorgesehen, dass die erste innerste Lage 6 des harzgetränkten Faserwerkstoffes 5 unter ständiger Drehung der Form 7 im Wesentlichen schaublinienförmig, vorzugsweise in einem Winkel zwischen 80° und 45° zur Drehachse 8 der Form 7, auf die Form 7 aufgewickelt wird, und dass die Vorrichtung 19 entsprechend hiefür ausgebildet ist. Zur flexiblen Vorgabe des Winkels ist vorgesehen, dass wenigstens Teile dieser Vorrichtung 19 winkelverstellbar sind. Zudem ist bevorzugt vorgesehen, dass die gesamte Vorrichtung 19 ausgebildet ist, einer Kontur der Form 7 zu folgen. Es kann dabei auch vorgesehen sein, Teile dieser Vorrichtung 19 durch einen Industrieroboter, insbesondere mit serieller Kinematik, zu realisieren.

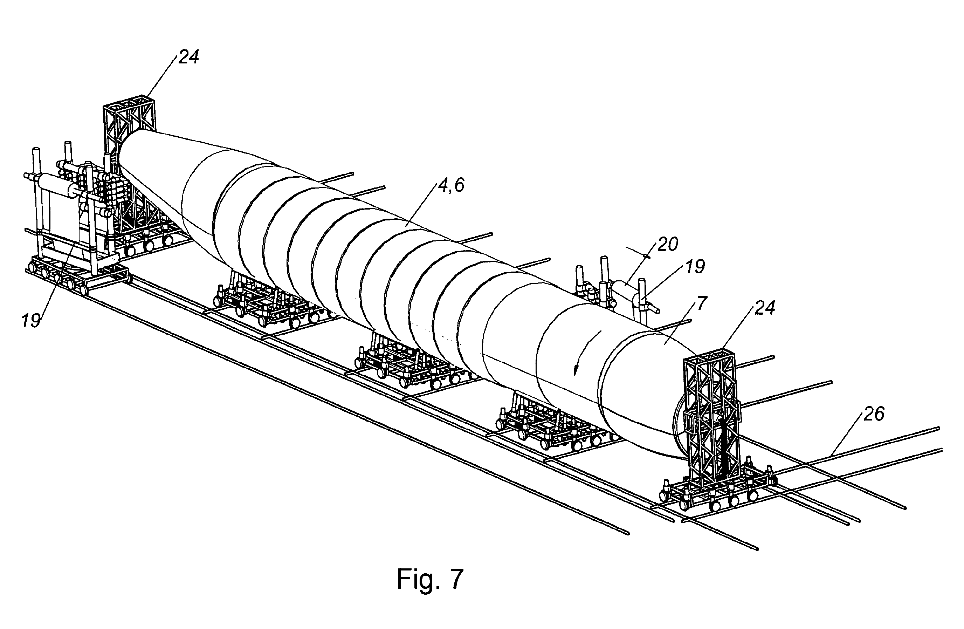

Zum Aufbringen der ersten Lage 6 der Innenschicht 5 ist daher vorgesehen, dass die Form 7 über deren Flansche 23 und die Trägervorrichtung 24 in Drehung versetzt wird. Dabei ist vorgesehen, dass eine konstante Drehzahl der Form 7 eingehalten wird, und zwischen den beiden Trägervorrichtungen 24, welche die Form 7 antreiben keine Schwingungen, etwa durch einen instabilen Regelkreis auftreten. Der wenigstens harzbenetzte Faserwerkstoff 5 zur Bildung der ersten Lage 6 der Innenschicht 3 wird - bevorzugt ohne weiteres Trennmittel - unmittelbar auf die Form 7 aufgebracht, wobei an einem Ende, gemäß Fig. 1 etwa am Heck, begonnen wird, und der Faserwerkstoff 5 ohne Unterbrechung durch ständigen stetigen Vorschub der Vorrichtung 19 schraublinienförmig auf die Form 7 aufgewickelt wird, wobei besonders bevorzugt ein Winkel von im Wesentlichen 45° zur Drehachse 8 der Form 7 vorgesehen ist. Es ist vorgesehen, dass der Faserwerkstoff 5 derart schraublinienförmig aufgewickelt wird, dass es zu Überlappungen der Wicklungen des Faserwerkstoffes 5 ein und derselben Bahn kommt, wobei sich das Maß der Überlappung aus dem Winkel zur Drehachse 8 den Abmessungen der Form 7 und der Breite der Bahn 21 ergeben. Die Fig. 1 und 7 zeigen das Aufbringen der derart gebildeten ersten Lage 6 der Innenschicht 3 auf die Form 7 in jeweils unterschiedlichen Ansichten.

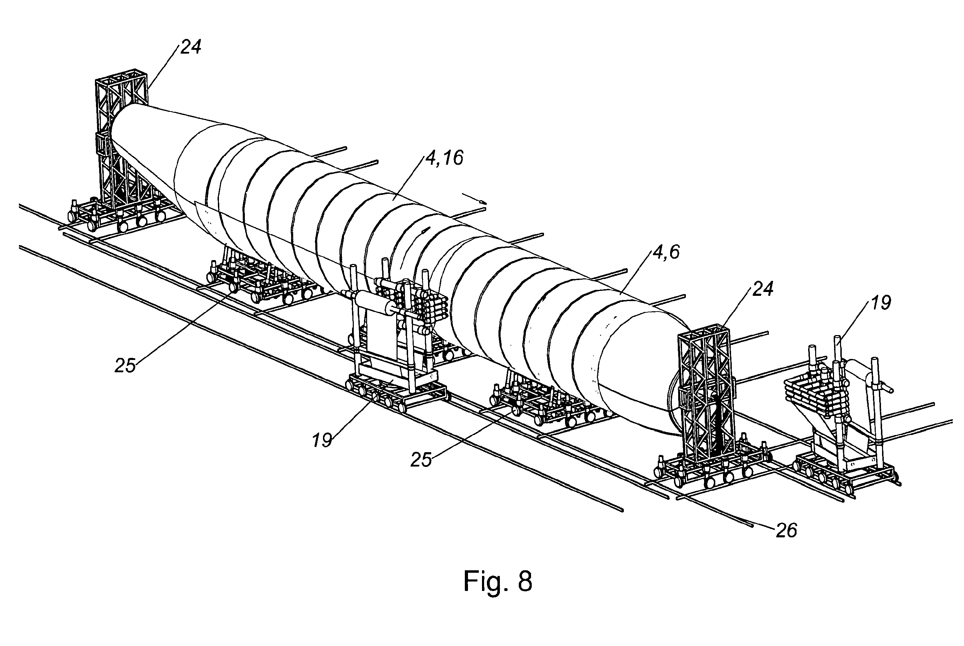

Nach Aufbringen der ersten Lage 6 ist vorgesehen, die zweite Lage 16 aufzubringen. Dabei ist bevorzugt vorgesehen, dass die zweite Lage 16 zur ersten Lage 6 gekreuzt aufgebraucht wird, daher, dass die einzelnen Faserstränge des Faserwerkstoffes 5 der zweiten Lage 16 die entsprechenden Faserstränge der ersten Lage 6 in einem vorgebbaren Winkel kreuzen. Fig. 8 zeigt eine bevorzugte Anordnung zum Aufbringen einer gekreuzten zweiten Lage 16, wobei eine weitere Vorrichtung 19 vorgesehen ist. Dadurch kann die zweite Lage 16 gekreuzt zur ersten Lage 6 gewickelt werden, ohne dass hiefür ein Stoppen der Rotation der Form 7 und eine Rotation in die entsprechend entgegengesetzte Richtung erforderlich wäre. Durch eine derartige weitere Vorrichtung 19 kann wertvolle Prozesszeit gespart werden.

In weitere Folge werden sämtliche weitere Lagen 4 der Innenschicht 3 in der genannten Weise auf die jeweils untere Lage 4 aufgebracht, wobei bevorzugt vorgesehen ist, dass zwei zueinander nächste Lagen gekreuzt zueinander angeordnet sind. Es kann auch vorgesehen sein, unterschiedliche Faserwerkstoffe 5 zu kombinieren, um spezielle vorgebbare Eigenschaften des Flugzeugrumpfes zu erzielen. So können etwa Aramidgewebe eingesetzt werden, um die Durchschusssicherheit der Innenschicht 3 zu erhöhen.

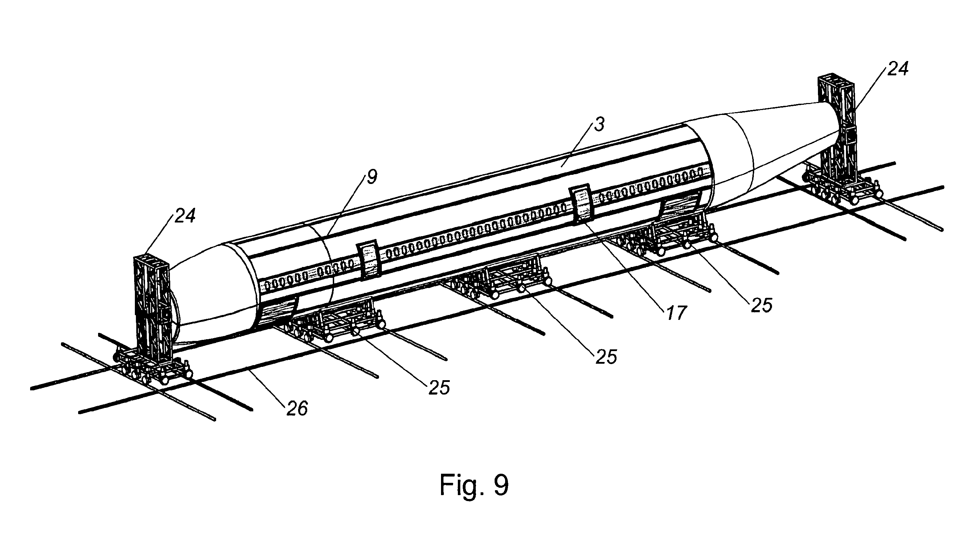

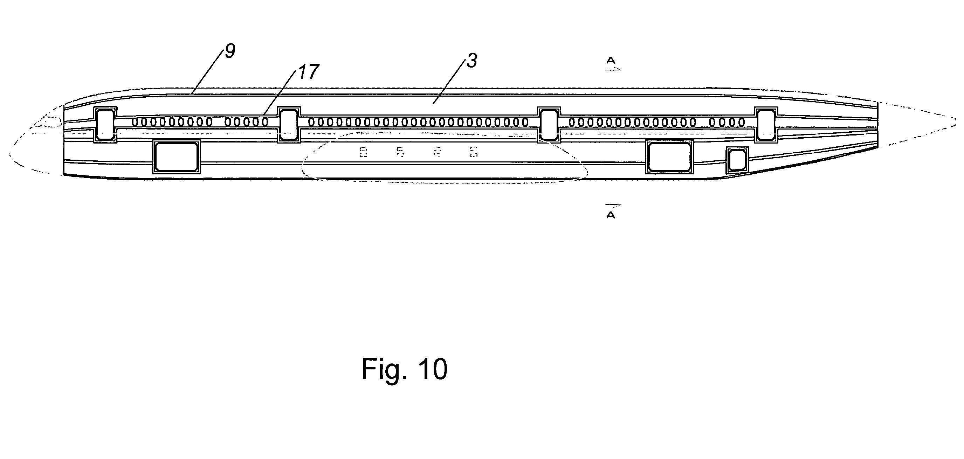

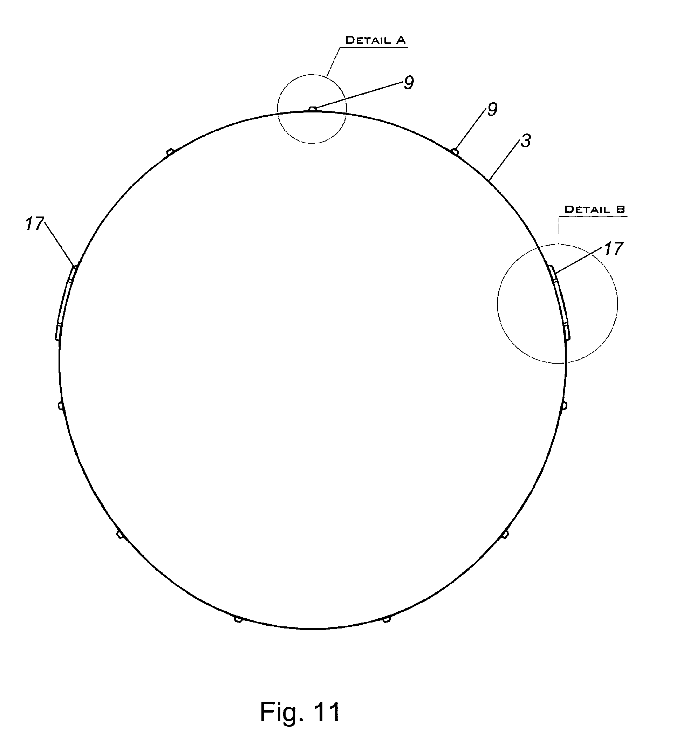

In einem weiteren Verfahrensschritt ist vorgesehen, dass - im Wesentlichen unmittelbar - nach Aufbringen sämtlicher Lagen 4, 6, 16 des wenigstens harzbenetzten Faserwerkstoffes 5 der Innenschicht 3 eine vorgebbare Anzahl an Profilelementen 9, 17, vorzugsweise umfassend Faserverbundwerkstoff, entlang einer Längserstreckung des Hohlkörpers 1, auf die Innenschicht 3, insbesondere mittels wenigstens harzbenetzten Faserwerkstoff 5, aufgebracht werden. Durch derartige in Längserstreckung des Flugzeugrumpfes 2 verlaufende Profilelemente 9, 17 wird der Flugzeugrumpf 2 hinsichtlich der Aufnahme der, in eben dieser Längserstreckung zu erwartenden Kräfte und Momente verstärkt. Fig. 9 und 10 zeigen eine Innenschicht 3 eines Flugzeugrumpfes 2, auf welchen die entsprechenden Profilelemente 9, 17 bereits aufgebracht wurden. Fig. 11 zeigt einen Querschnitt gemäß dem Schnitt A - A in Fig. 10. Dabei ist zu erkennen, dass zwei Arten von Profilelementen 9, 17 auf die Innenschicht 3 aufgebracht wurden. Neben ersten Profilelementen 9, welche bevorzugt als im Wesentlichen gerade bzw. der Kontur der Innenschicht 3 folgend ausgebildet sind, sind weiters sog. Tür- und/oder Fensterprofilelemente 17 auf die Innenschicht 3 aufgebracht worden.

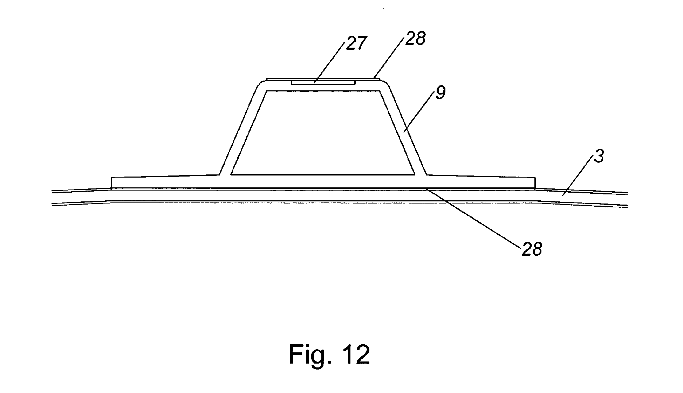

Die Profilelemente 9, 17, sowohl die ersten Profilelemente 9 als auch die Tür- und/oder Fensterprofilelemente 17 weisen bevorzugt einen kastenartigen Hohlquerschnitt auf, und sind bevorzugt ebenfalls umfassend einen Faserwerkstoff ausgebildet. Fig. 12 zeigt einen bevorzugten Querschnitt eines ersten Profilelements 9. Diese weisen bevorzugt an einem der Außenschicht 18 zugewandten Bereich eine metallische Schicht 27, etwa ein Kupferband, zur Blitzableitung auf. Die Profilelemente 9 werden bevorzugt mittels Faserwerkstoffes in Form sog. Prepeg-Gewebebänder 28 mit der Innenschicht 3 verbunden. Bei Aufbringen der Profilelemente 9, 17 auf die Innenschicht 3 ist die Innenschicht 3 noch nicht ausgehärtet. Daher erfolgt das Aufbringen der Profilelemente 9, 17 im Wesentlichen unmittelbar nach Aufbringen der letzten Lage 4 auf die Innenschicht 3. Oberhalb der metallischen Schicht 27 ist bevorzugt ein weiteres Prepeg-Gewebeband 28 angeordnet, um eine bevorzugte Verbindung zu einer Außenschicht 18 herzustellen.

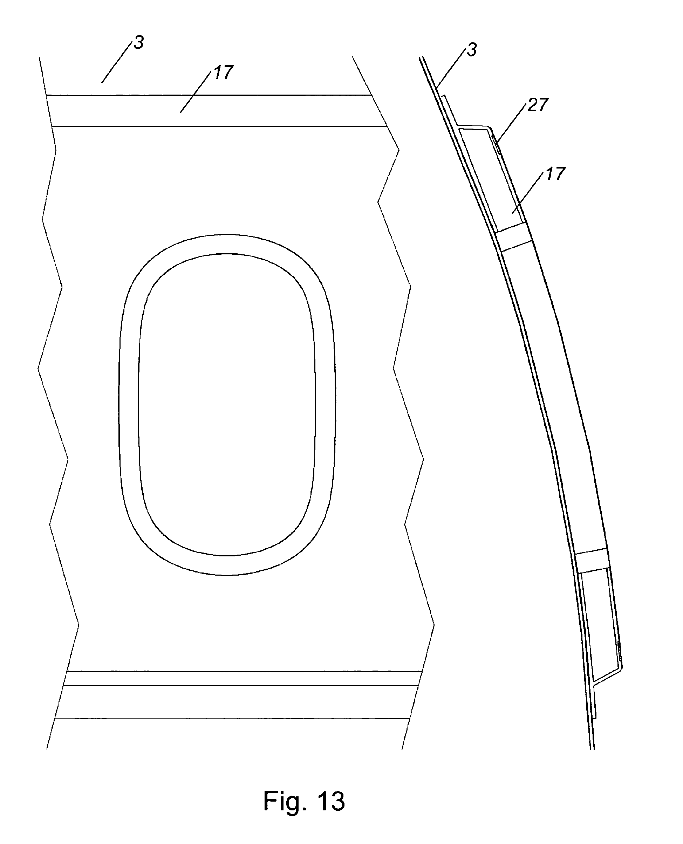

Fig. 13 zeigt eine bevorzugte Ausführung eines Tür- und/oder Fensterprofilelements 17. Wie zu erkennen, weist dies ebenfalls einen Hohlquerschnitt, sowie die metallische Schicht 27 auf. Die Tür- und/oder Fensterprofilelemente 17, welche bevorzugt ebenfalls mittels Prepeg-Gewebebänder 28 mit der Innenschicht 3 verbunden werden, weisen lediglich die Konturen der Fensteröffnungen 14, Türöffnungen 13, und weiteren Öffnungen des Flugzeugrumpfes 2, wie etwa Fahrwerksschächte, Frachtraumtüren, Wartungsklappen, Zugangsöffnungen für eine externe Stromzufuhr oder Zufuhr von Druckluft, auf. Nach diesem Verfahrensschritt weist der Flugzeugrumpf 2 jedoch noch keine der entsprechenden Öffnungen selbst auf. Deren Umrisse sind lediglich durch die Tür- und/oder Fensterprofilelemente 17 vorgegeben. Es kann vorgesehen sein, dass für jede vorgesehene Öffnung ein separates Tür- und/oder Fensterprofilelement 17 vorgesehen ist. Es kann jedoch auch ein spezielles Tür- und/oder Fensterprofilelement 17 vorgesehen sein, welches eine vorgebbare Anzahl vorgesehene Öffnungen berandet, wodurch das Aufbringen der notwendigen Anzahl an Tür- und/oder Fensterprofilelementen 17 deutlich beschleunigt werden kann.

Nach dem vollständigen Aufbringen sämtlicher Profilelemente 9, 17 ist in einem nächsten Verfahrensschritt vorgesehen, dass umfangsseitig, sowie vorzugsweise in Längserstreckung, eine vorgebbare Anzahl nichttragender Außenschichtsegmente 10 angeordnet werden. Die Außenschicht 18, welche mit der späteren Außenhaut des Flugzeugrumpfes 2 identisch ist, wird daher in Form einzelner Außenschichtsegmente 10 bereits vorher hergestellt und erst bei Fertigstellung des Flugzeugrumpfes 2 auf diesen aufgebracht.

Die Außenschichtsegmente 10 sind dazu vorgesehen keine wesentlichen Kräfte aufzunehmen bzw. zu übertragen, und weisen etwa bevorzugt eine gesamte Dicke von etwa 0,3 bis 1 mm, insbesondere etwa 0,5 mm, auf. Die Außenschichtsegmente 10 können dabei flach hergestellt werden, wodurch deren Herstellung und Transport sehr einfach und kostenschonend erfolgen kann. Dabei können die Außenschichtsegmente 10 bereits vollständig fertig hergestellt werden. Diese werden daher bevorzugt bereits vollständig lackiert hergestellt und in einem derartigen Zustand auf dem Flugzeugrumpf 2 montiert.

Bevorzugt ist vorgesehen, dass ein Außenschichtsegment 10 an dessen der Innenschicht 3 zugewandten Seite lediglich eine einzige Lage 4 eines Faserwerkstoffes 5 aufweist. Diese einzige Lage 4 ist durch eine weitere Lage eines feinen Faservlieses überdeckt, um eine sehr glatte Oberfläche zu erlangen. Auf diese Schicht Faservlies ist eine bevorzugt leitende Farbe bzw. ein leitender Lack aufgebracht, wodurch eine weitere Steigerung des Blitzschutzes des Flugzeugrumpfes 2 erreicht werden kann. Es kann vorgesehen sein, dass zwischen dem Lack und dem Faservlies eine weitere Schicht eines metallischen Werkstoffes, etwa eines Kupfergewebes, angeordnet ist. Ein besonderer Vorteil dieser sehr dünnwandigen Außenschichtsegmente 10 ist, dass im Falle einer Beschädigung, etwa durch einen Vogelschlag, keine tragenden Teile betroffen sind, und dass dünnwandige Faserwerkstoffe sehr einfach repariert werden können, da kein Freilegen der einzelnen Lagen 4 erforderlich ist.

Vor Anbringen der Außenschichtsegmente 10 an dem Flugzeugrumpf 2 werden diese über die Glastemperatur erwärmt, wodurch diese einfach gebogen werden können, und auf die gewünschte Kontur gebogen.

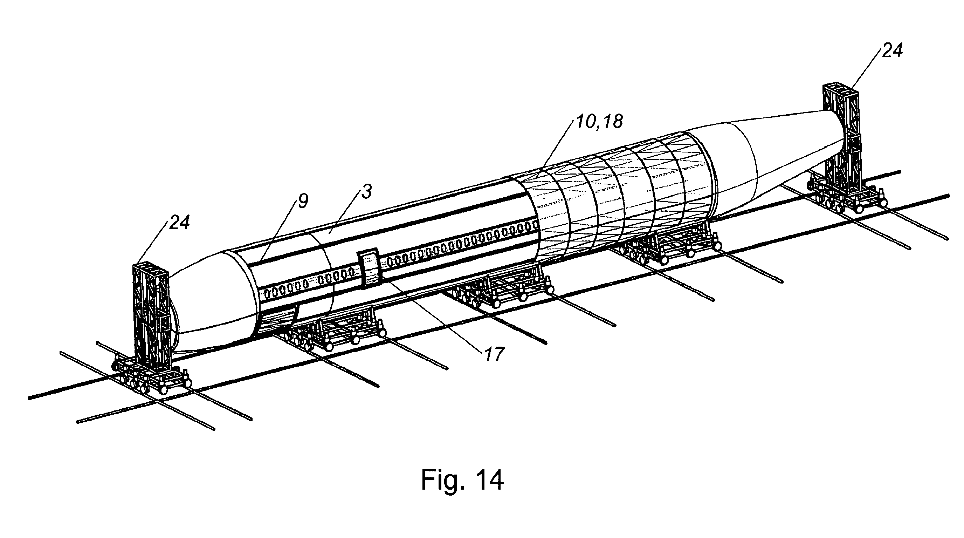

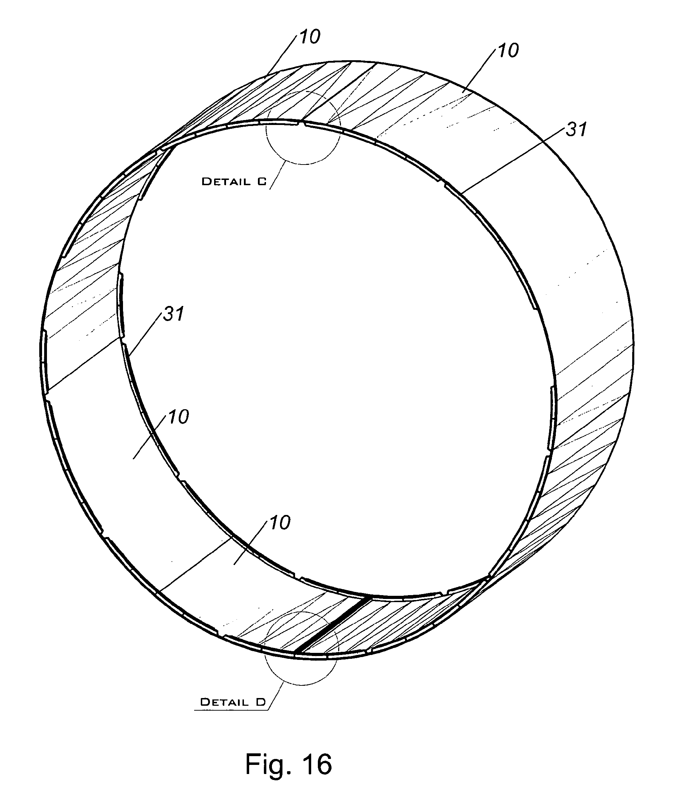

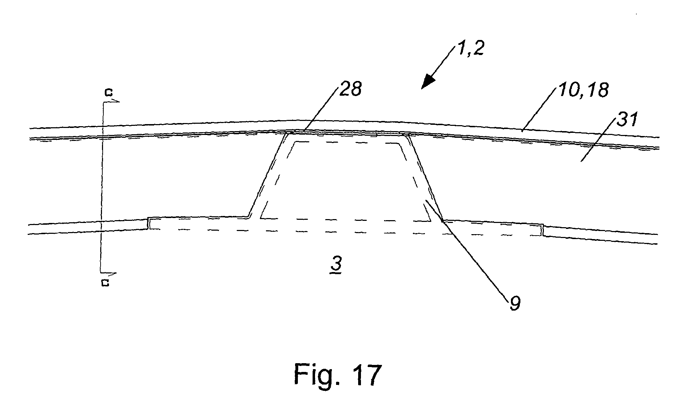

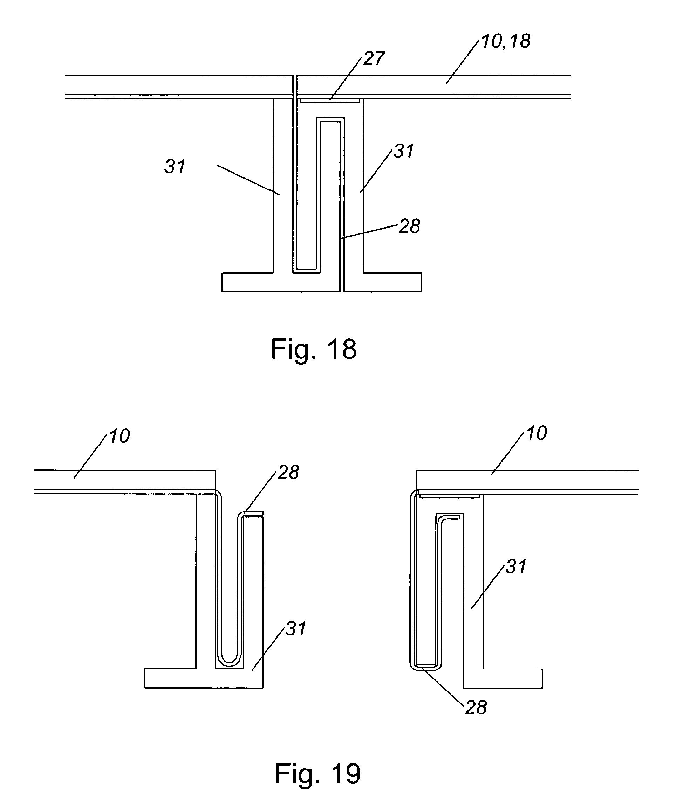

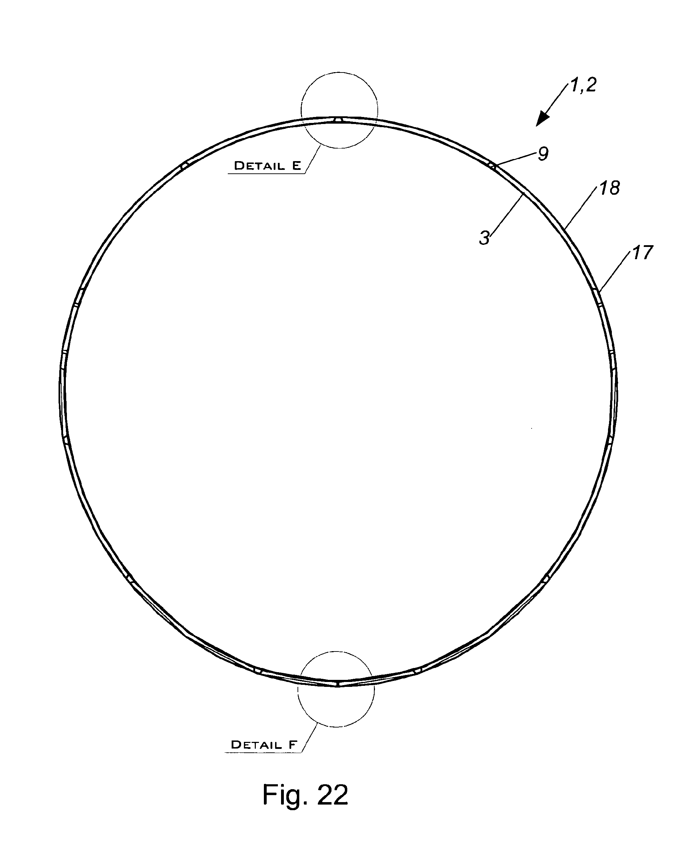

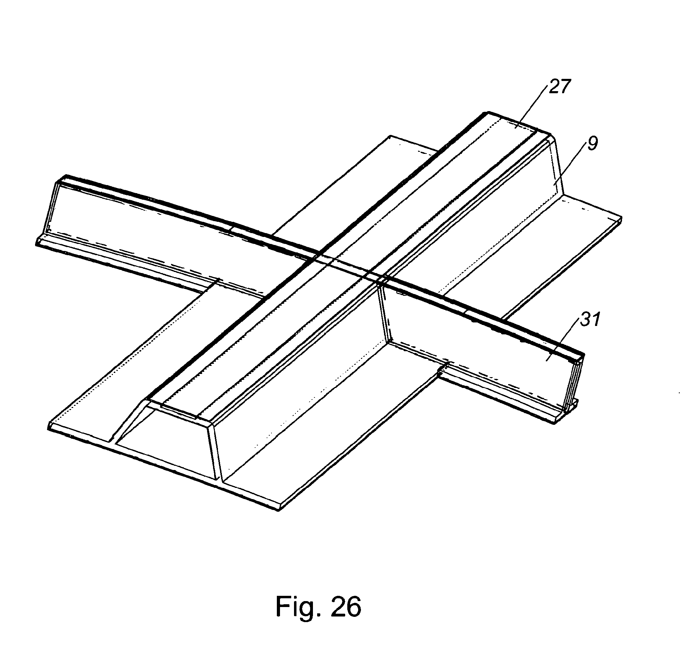

Bevorzugt ist vorgesehen, dass die einzelnen Außenschichtsegmente 10 jeweils formschlüssig miteinander verbunden werden, und vorzugsweise auf den Profilelementen 9 aufliegen. Fig. 14 zeigt eine Ansicht eines Flugzeugrumpfes 2, bei welchem ein Teil der Außenschichtsegmente 10 bereits aufgebracht wurden. Zur besseren Verdeutlichung der Teilung der Außenschichtsegmente 10 und deren formschlüssigen Verbindung zeigt Fig. 16 einen lediglich aus Außenschichtsegmenten 10 gebildeten Umfang. Wie in Fig. 17 erkennbar, liegt das Außenschichtsegment 10 auf dem ersten Profilelement 9 auf, mit welchem es mittels des Prepeg-Gewebebandes 28 verbunden wird. Die Fig. 18 bis 21 zeigen jeweils Details zweier Außenschichtsegmente 10 vor und nach deren Verbindung. Die Verbindungsbereiche 31 der Außenschichtsegmente 10, welche dazu vorgesehen sind miteinander verbunden zu werden, sind bevorzugt mit einem Prepeg-Gewebeband 28 versehen. Wie aus den weiteren Detailansichten gemäß den Fig. 22 bis 25 zu entnehmen, ist eine derartige formschlüssige Verbindung aneinander angrenzender Außenschichtsegmente 10 sowohl umfangsseitig als auch in Längsrichtung vorgesehen. Bei der umfangsseitigen Applikation der Außenschichtsegmente 10 kann es vorgesehen sein, dass die Außenschichtsegmente 10 mittels eines Presswerkzeuges, etwa einem Gurt, zusammengespannt werden, damit die einzelnen Verbindungsbereiche 31 der Außenschichtsegmente 10 ineinander greifen. Fig. 26 zeigt einen Kreuzungspunkt zwischen einem ersten Profilelement 9 und einem Verbindungsbereich 31 eines Außenschichtsegments 10.

Durch die bevorzugte Ausgestaltung der Verbindungsbereiche 31 der Außenschichtsegmente 10 jeweils in Form eines kombinierten U- und L-Profils, wie in den Fig. 18 bis 21 dargestellt, wird bei der Verbindung zweier aneinander angrenzender Außenschichtsegmente 10 ein Doppel-T-Profil mit einem sehr stabilen vertikalen Zwischenstück gebildet. Die Verbindungsbereiche 31 der Außenschichtsegmente 10 bilden daher umfangsseitig geschlossene Doppel-T-Profile, welche in der Art von Spannten dem Flugzeugrumpf 2 zusätzliche Festigkeit und Stabilität verleihen.

Die Verbindungsbereiche 31 der Außenschichtsegmente 10 bilden zwischen der Innenschicht 3 und der durch die Außenschichtsegmente 10 gebildeten Außenschicht 18 im Wesentlichen abgeschlossene und begrenzte Hohlräume 11. Bevorzugt ist in einem weiteren Verfahrensschritt vorgesehen, diese, zwischen der Innenschicht 3, den Profilelementen 9, 17 und den Außenschichtsegmenten 10 gebildeten Hohlräume 11 auszuschäumen. Hiefür ist bevorzugt ein druck- und temperaturbeständiger Schaum vorgesehen. Besonders bevorzugt ist ein PU-Schaum, etwa der Firma HEXCEL, vorgesehen, welcher Temperaturen von 200°C und Drücken von bis zu 10 Bar über eine begrenzte Zeit standhält. Bevorzugt ist vorgesehen, dass der Abstand zwischen Innenschicht 3 und Außenschicht 18 zwischen 2 cm und 7 cm, insbesondere zwischen 3 cm und 6 cm, vor allem im Wesentlichen etwa 5 cm, beträgt. Durch das Ausschäumen der Hohlräume 11 erfolgt ein Schutz der Innenschicht vor mechanischen Beschädigungen, sowie vor thermischen Wechselbelastungen. Dadurch kann erreicht werden, dass die Innenschicht 3 bei Verwendung einer temperierten Innenkabine nicht auf die niedrigen Außentemperaturen von - 60°C und weniger abkühlt. Dadurch kommt es in Hohlräumen in der Innenschicht 3, welche gemäß dem gegenständlichen Verfahren ohnedies kaum vorkommen, zu keinem Kondensieren bzw. Gefrieren der Feuchtigkeit und folglich auch zu keiner Materialermüdung. Weiters dient der Schaum der Schallisolation.

Nach dem Ausschäumen der Hohlräume 11 ist in einem weiteren Verfahrensschritt vorgesehen, dass die Form 7 aus einem Innenraum 15 des Hohlkörpers 1 entfernt wird. Hiefür kann es vorgesehen sein, die Innenschicht 3 in sehr begrenztem Umfang zu erwärmen, wobei jedoch darauf zu achten ist, dass die Innenschicht 3 und insbesondere die erste Lage 6 nicht aushärtet. Durch dieses Erwärmen soll erreicht werden, dass die Innenschicht hinsichtlich deren statischen Fähigkeiten derart stark ausgebildet ist, dass diese deren Eigengewicht ohne nennenswerte Verformungen aufnehmen kann, sowie durch menschliche Arbeiter begehbar ist. Bevorzugt ist hiebei vorgesehen, den Hohlkörper für eine halbe Stunde auf 120 °C zu erwärmen, wobei dies bevorzugt dadurch erfolgt, dass entsprechend vorgeheizte Luft durch das Innere der Form geführt wird. Bei der vorbeschriebenen bevorzugten Ausbildung der Form 7 umfassend silikonbeschichtetes Glasfasergewebe kann zum Entfernen der Form 7 vorgesehen sein, einen Unterdruck in der Form herzustellen, sowie zwischen der Form 7 und der Innenschicht 3 ein Gas, etwa Luft, einzublasen, um das Loslösen der Form 7 von der Innenschicht 3 zu unterstützen.

Nach dem Entfernen der Form 7 aus dem Innenraum 15 ist in einem weiteren Verfahrensschritt bevorzugt vorgesehen, dass vorgebbare Einbauten 12, vorzugsweise umfassend Faserverbundwerkstoff, im Innenraum 15 des Hohlkörpers 1 angeordnet werden, und unmittelbar mit der Innenschicht 3, insbesondere mittels wenigstens harzbenetzten Faserwerkstoffs 5, verbunden werden. Durch die unmittelbare Verbindung von Einbauten 12 des Innenraums 15 mit der Innenschicht 3 können diese Einbauten 12 selbst als tragende Teile Kräfte aufnehmen bzw. übertragen. Dadurch kann etwa der Kabinenboden oder der Frachtraumboden als Teil der tragenden Konstruktion des Flugzeugrumpfes 2 bereits bei dessen Planung mitberücksichtigt werden. Dadurch kann der gesamte Flugzeugrumpf 2 noch deutlich leichter gebaut werden. Weiters besteht die Möglichkeit, Sitze oder Gebäckablagen direkt mit der Innenschicht 3 zu verbinden. Durch diese Verbindung wird die Sicherheit erhöht, da kein Ausreißen eines Verbindungsmittels befürchtet werden muss. Weiters kann dadurch weiters Masse eingespart werden, da auf die heutigen Verbindungsmittel aus Metall vollständig verzichtet werden kann. Bevorzugt ist vorgesehen, dass die Innenschicht 3 selbst bereits als innerste Sichtfläche unverkleidet einem Fluggastraum zugewandt ist, wodurch auf weitere Masse verzichtet werden kann.

Im Zuge des Anbringens von Einbauten in den Innenraum 3 ist bevorzugt auch vorgesehen, Kabelkanäle sowie Durchführungen und Halterungen für Hydrauliksysteme in den Einbauten 12 vorzusehen, bzw. separat vorzusehen und unmittelbar mit der Innenschicht 3 zu verbinden. Weiters kann vorgesehen sein, Aufhängungen für das Fahrwerk und/oder die Tragflächen unmittelbar mit der Innenschicht 3 zu verbinden, sowie gegebenenfalls Treibstoff- und/oder weitere Flüssigkeitstanks vorzusehen und mit der Innenschicht 3 zu verbinden. Durch die bevorzugte Ausbildung so vieler dieser Einbauten 12 wie möglich umfassend Faserwerkstoff 5, kann erreicht werden, dass der gesamte Flugzeugrumpf 2 wie aus einem Stück gebildet ist, und keine potentiellen Bruchstellen an Verbindungsstellen zu nachträglich zugefügten Bauteilen aufweist. Dadurch kann die Sicherheit eines Luftfahrzeuges deutlich erhöht werden, wobei gleichzeitig die Masse und der Herstellungsaufwand reduziert werden kann.

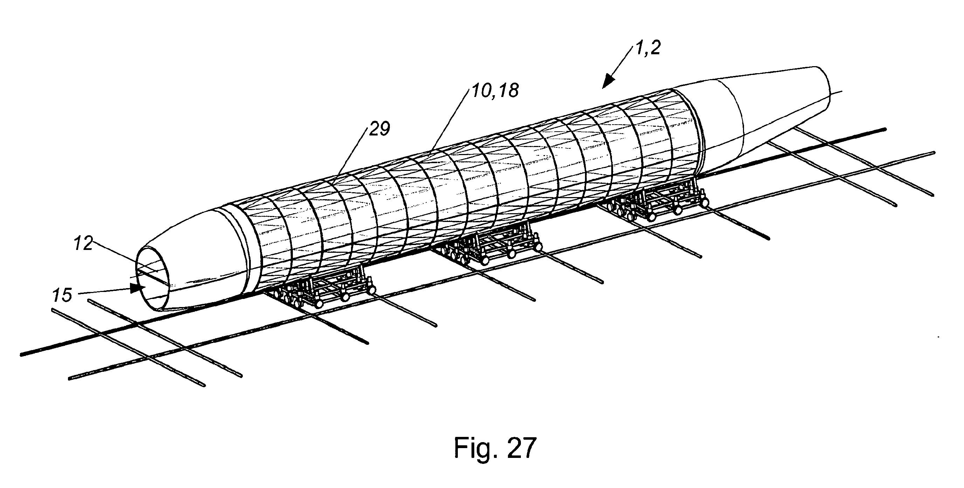

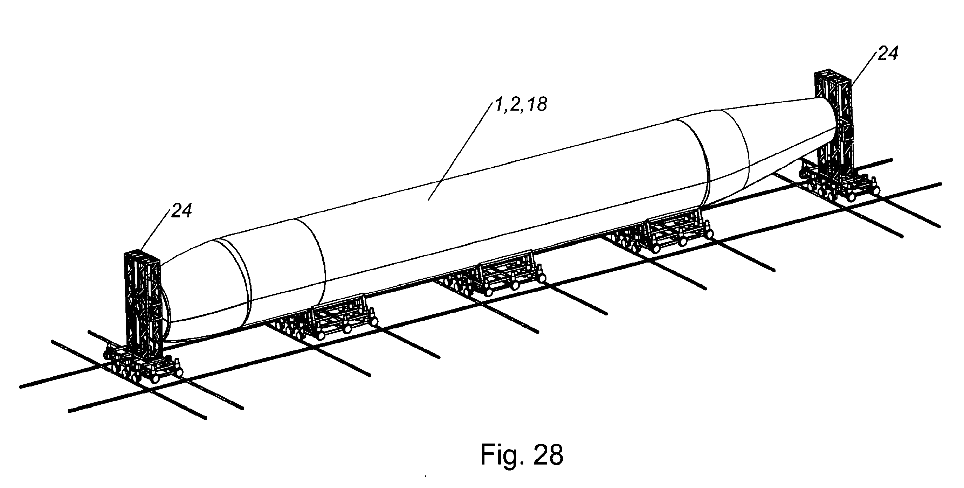

Fig. 27 zeigt einen Flugzeugrumpf 2, in welchen bereits die inneren Einbauten 12 vorgenommen wurden, wie dies am Kabinenboden erkennbar ist. Dieser Rumpf weist jedoch noch die zwischen den einzelnen Außenschichtsegmenten 10 entstandenen Trennfugen 29 auf, welche in einem weiteren Verfahrensschritt verfüllt werden. Dabei wird auch die endgültige Lackierung vervollständigt, indem die verfüllen Trennfugen 29 lackiert werden. Fig. 28 zeigt einen derartig fertiggestellten Flugzeugrumpf 2.

In einem nächsten Verfahrensschritt ist vorgesehen, dass der Flugzeugrumpf 2, insbesondere durch Durchführen entsprechend aufgeheizter Luft durch den Innenraum 15 des Flugzeugrumpfs 2, ausgehärtet wird, wobei dies einfach durch das Durchströmen und/oder Umströmen des Flugzeugrumpfes 2 mit Heißluft erfolgen kann. Bevorzugt ist hiebei vorgesehen dass Heißluft bis zu einer Temperatur von 180°C durch den Innenraumgeführt wird, wobei im Innenraum ein Druck zwischen 10 bar und 20 bar aufgebaut wird. Dadurch erfolgt beim aushärten ein sog. Pressmolding. Eine Behandlung in einer Autoklave kann unterbleiben, wodurch die Anschaffung und der Betrieb einer Autoklave sowie gegebenenfalls der Transport der Teile zu der Autoklave unterbleiben kann. Ebenfalls entfällt dadurch die Limitierung der Bauteilgröße durch die Innenmaße der Autoklave.

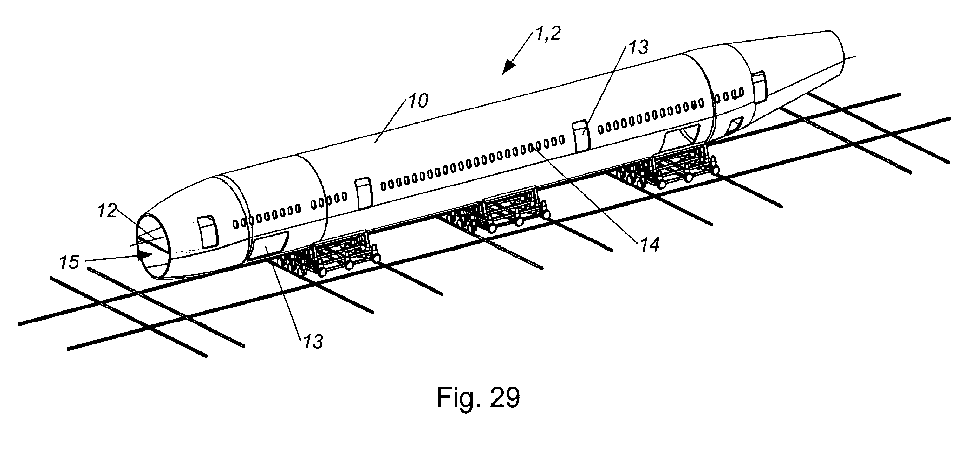

In einem weiteren Verfahrensschritt ist vorgesehen, dass - bei Ausbildung des Hohlkörpers 1 als Flugzeugrumpf 2 - Tür- und/oder Fensteröffnungen 13, 14 entlang der entsprechend angeordneten Tür- und/oder Fensterprofilelemente 17 in den Flugzeugrumpf 2 geschnitten werden. Dabei ist bevorzugt vorgesehen, dass insbesondere die Türöffnungen 13 derart aus dem Flugzeugrumpf 2 geschnitten werden, dass die ausgeschnittenen Teile bereits als Tür wiederverwendet werden können, wodurch auf weitere Materialaufwendungen für diesen Zweck verzichtet werden kann. Bevorzugt ist vorgesehen, dass die Tür- und/oder Fensteröffnungen 13, 14 mittels Laser geschnitten werden. Fig. 29 zeigt einen derart komplettierten Flugzeugrumpf 2, wobei weiters auch vorgesehen sein kann, die Anschlussbereiche der Tragfläche entsprechend auszuschneiden.

Weitere erfindungsgemäße Ausführungsformen weisen lediglich einen Teil der beschriebenen Merkmale auf, wobei jede Merkmalskombination, insbesondere auch von verschiedenen beschriebenen Ausführungsformen, vorgesehen sein kann.

## Patentansprüche

1. Verfahren zur Herstellung eines - als Sandwichkonstruktion ausgebildeten - Hohlkörpers (1), insbesondere eines Flugzeugrumpfs (2), wobei eine Innenschicht (3) aus einer vorgebbaren Anzahl an Lagen (4) eines vorgebbaren wenigstens harzbenetzten Faserwerkstoffes (5), insbesondere umfassend Kohlenstofffasern, gebildet wird, **dadurch gekennzeichnet, dass** wenigstens eine erste Lage (6) der Innenschicht (3) schraublinienförmig und - im Wesentlichen über eine gesamte Länge des Hohlkörpers (1) - unterbrechungsfrei angeordnet wird.

2. Verfahren nach Anspruch 1, **dadurch gekennzeichnet, dass** die Innenschicht (3) als - wenigstens umfangsseitig - im Wesentlichen alleinig tragende Schicht der Sandwichkonstruktion ausgebildet wird.

3. Verfahren nach Anspruch 1 oder 2, **dadurch gekennzeichnet, dass** die erste Lage (6) der Innenschicht (3) auf eine Form (7), durch vorzugsweise kontinuierliche Drehung der Form (7) um eine Drehachse und Vorbewegung des wenigstens harzbenetzten Faserwerkstoffes (5) im Wesentlichen parallel zu einer Drehachse (8) der Form (7), aufgebracht wird.

4. Verfahren nach einem der Ansprüche 1 bis 3, **dadurch gekennzeichnet, dass** eine zweite Lage (16) der Innenschicht (3) gekreuzt zu der vorhergehend aufgebrachten ersten Lage (6) aufgebracht wird.

5. Verfahren nach einem der Ansprüche 1 bis 4, **dadurch gekennzeichnet, dass** - im Wesentlichen unmittelbar - nach Aufbringen sämtlicher Lagen (4, 6, 16) des wenigstens harzbenetzten Faserwerkstoffes (5) der Innenschicht (3) eine vorgebbare Anzahl an Profilelementen (9), vorzugsweise umfassend Faserverbundwerkstoff, entlang einer Längserstreckung des Hohlkörpers (1), auf die Innenschicht (3), insbesondere mittels wenigstens harzbenetzten Faserwerkstoff, aufgebracht werden.

6. Verfahren nach Anspruch 5, **dadurch gekennzeichnet, dass** umfangsseitig, sowie vorzugsweise in Längserstreckung, eine vorgebbare Anzahl, vorzugsweise nichttragender, Außenschichtsegmente (10) angeordnet werden, welche jeweils formschlüssig miteinander verbunden werden, und welche vorzugsweise auf den Profilelementen (9) aufliegen.

7. Verfahren nach Anspruch 6, **dadurch gekennzeichnet, dass** zwischen der Innenschicht (3), den Profilelementen (9) und den Außenschichtsegmenten (10) gebildete Hohlräume (11) ausgeschäumt werden.

8. Verfahren nach Anspruch 7, **dadurch gekennzeichnet, dass** die Form (7) aus einem Innenraum (15) des Hohlkörpers (1) entfernt wird.

9. Verfahren nach Anspruch 8, **dadurch gekennzeichnet, dass** vorgebbare Einbauten (12), vorzugsweise umfassend Faserverbundwerkstoff, im Innenraum (15) des Hohlkörpers (1) angeordnet werden, und unmittelbar mit der Innenschicht (3), insbesondere mittels wenigstens harzbenetzten Faserwerkstoffs, verbunden werden.

10. Verfahren nach Anspruch 8 oder 9, **dadurch gekennzeichnet, dass** der Hohlkörper (1), insbesondere durch Durchführen vorgebbar temperierter Luft, ausgehärtet wird.

11. Verfahren nach Anspruch 10, **dadurch gekennzeichnet, dass** - bei Ausbildung des Hohlkörpers (1) als Flugzeugrumpf (2) - Tür- und/oder Fensteröffnungen (13, 14) entlang entsprechend angeordneter Tür- und/oder Fensterprofilelemente (17) in den Hohlkörper (1) geschnitten werden.

12. Hohlkörper (1), vorzugsweise hergestellt gemäß einem Verfahren nach einem der Ansprüche 1 bis 11, insbesondere Flugzeugrumpf (2), welcher im Wesentlichen als Sandwichkonstruktion ausgebildet ist, umfassend eine - einem Innenraum (15) des Hohlkörpers (1) zugewandte - Innenschicht (3), welche wenigstens eine erste Lage (6) eines vorgebbaren Faserverbundwerkstoffes (5), insbesondere umfassend Kohlenstofffasern, umfasst, **dadurch gekennzeichnet, dass** wenigstens die erste Lage (6) des Faserverbundwerkstoffes (5) schraublinienförmig und - im Wesentlichen über eine gesamte Länge des Hohlkörpers (1) - unterbrechungsfrei angeordnet ist, und dass die Innenschicht (3) vorzugsweise als - wenigstens umfangsseitig - im Wesentlichen alleinig tragende Schicht der Sandwichkonstruktion ausgebildet ist.

13. Hohlkörper (1) nach Anspruch 12, **dadurch gekennzeichnet, dass** zwischen der Innenschicht (3) und einer - eine Außenkontur aufweisenden - Außenschicht (18) eine vorgebbare Anzahl Profilelemente (9) und/oder Tür- und/oder Fensterprofilelemente (17) angeordnet sind, welche entlang einer Längserstreckung des Hohlkörpers (1) verlaufen.

14. Hohlkörper (1) nach Anspruch 12 oder 13, **dadurch gekennzeichnet, dass** die Außenschicht (18) umfangsseitig, sowie vorzugsweise in Längserstreckung, durch eine vorgebbare Anzahl im Wesentlichen nichttragender Außenschichtsegmente (10) gebildet ist, welche jeweils formschlüssig miteinander verbunden sind.

15. Vorrichtung (19) zur Herstellung eines mit Harz wenigstens benetzten Faserwerkstoffes (5), wobei die Vorrichtung (19) eine Aufbewahrungsanordnung (20) für eine Bahn (21) eines unbenetzten Faserwerkstoffs (5) aufweist, sowie wenigstens ein Gefäß (22) zur Aufnahme einer vorgebbaren Menge Harz, **dadurch gekennzeichnet, dass** die Vorrichtung (19) zum wiederholten Eintauchen wenigstens eines ersten Bereichs der Bahn (21) des Faserwerkstoffes (5) in das Harz ausgebildet ist.
